# EUROPEAN PATENT SPECIFICATION

(11) **EP 4 506 672 B1**
(45) Date of publication and mention of the grant of the patent: **11.11.2026**
(21) Application number: 24190456.4
(22) Date of filing: 23.07.2024
(51) Int. Cl.: G01M 11/00

(54) **CHROMATIC DISPERSION MEASUREMENT**
MESSUNG DER CHROMATISCHEN DISPERSION
MESURE DE DISPERSION CHROMATIQUE

(30) Priority: 08.08.2023 US 202363518197 P
(43) Date of publication of application: 12.02.2025
(73) Proprietor: EXFO Inc., Québec, QC G1M 2K2 (CA)
(72) Inventor: LECLERC, Michel, Québec, G1M 2K2 (CA); CHEN, Hongxin, Québec, G1M 2K2 (CA)
(74) Representative: Gregory, Alexandra Louise

(56) References cited:
- EP-B1- 2 549 665
- US-A- 5 619 320
- US-A1- 2022 390 321
- US-B2- 7 920 253
- US-B2- 9 423 316

## Description

### TECHNICAL FIELD

The present description generally relates to chromatic dispersion measurement, and more particularly to chromatic dispersion measurement in optical fiber devices or links, based on the group-delay approach.

### BACKGROUND

Chromatic dispersion is a physical phenomenon encountered in optical fiber links and which affects signal transmission quality. Chromatic dispersion is caused by a physical property of the transmission medium which cause light at different wavelengths to travel at different speeds. It has the effect of broadening optical transmission pulses, which is especially critical for high-speed transmission such as 40-Gbps and 100-Gbps signals.

As part of the characterization of an optical fiber link, the chromatic dispersion may need to be measured. One method of measuring the chromatic dispersion of an optical fiber link in the field is the so-called spectral group delay method (also known as the time-of-flight method), which is described, e.g., in TIA Standard no. TIA-455-175-B and Page et al. "Measuring chromatic dispersion of optical fiber using time-of-flight and a tunable multi-wavelength semiconductor fiber laser", Optics Communications, Vol. 265, pp. 161-170 (2006).

In short, the time-of-flight / pulse-delay method measures the travel time of light carriers through the optical fiber link under test at different wavelengths. Such measurement may be obtained using a multi-wavelength Optical Time Domain Reflectometer (OTDR). The OTDR launches light pulses at multiple wavelengths into one end of the optical fiber link under test. It then analyzes the travel time after a back-reflection from a mirror or non-angled polished (UPC) connector at the other end of the link, which length can also be deduced from the travel time. The group delay as a function of wavelength is then calculated by comparing the travel times and the chromatic dispersion coefficient may be deduced therefrom.

Compared to other chromatic dispersion measurement methods such as the phase shift method, the OTDR pulse-delay method is less expensive because of the low cost of the required test instrument (compared, e.g., to the phase-shift test setup). It also has the advantage of being a single-ended solution which is more efficient for field testing than other methods because it advantageously requires a single operator to carry out the test.

However, one concern with the OTDR pulse-delay method is that an impressive dynamic range is required for characterizing long optical fiber links such as link lengths over 100 km. Although the dynamic range may be improved by averaging over a longer time, acquisition time may then become an issue. The OTDR pulse-delay method is therefore a good solution for metro and access applications but less applicable to long-haul applications.

There therefore remains a need for improving the dynamic range vs the acquisition time of the pulse-delay method for measuring chromatic dispersion.

EP 2549665 B1 describes a method and a device for processing optical signals in an optical network element are provided, wherein said optical network element is arranged for conveying data via several wavelengths from a single laser source, wherein each wavelength is assigned to one channel, wherein an OTDR event is generated on at least one wavelength, and wherein a reflection of the light based on the OTDR event is determined.

### SUMMARY

There is therefore provided an improved method for measuring the chromatic dispersion using the group-delay approach, which allows to improve the dynamic range vs the acquisition time, e.g., reach more dynamic range for the same acquisition time.

There is proposed to improve the dynamic range/acquisition time of the group-delay method using a technique similar to correlation coded OTDR. In short, for each OTDR acquisition, instead of launching a single OTDR pulse at a time, a sequence of pulses is used. A correlation method is then used to detect the sequence of pulses after a back-reflection from a mirror or non-angled polished (UPC) connector at the remote end of the link and extract the position of the reflective peak. The process is repeated at various wavelengths to compare the travel times and deduce therefrom the chromatic dispersion coefficient.

Still, some key differences exist between the correlation coded OTDR and the herein proposed repeated pulse method. Notably, the group delay method for chromatic dispersion measurement only targets one specific reflectance peak at the other end of the optical fiber link, whereas correlation coded OTDRs need to characterize the whole link.

It is noted that correlation coded OTDRs suffer from some artifacts that are due to correlation side lobes. This can be especially problematic when characterizing low-loss or low-reflectance events. However, the group-delay method only needs to find one specific reflectance peak at the other end of the optical fiber link under test. Extracting this typically highly reflective peak is more tolerant to artifacts, which makes a repeated pulse method more suitable for chromatic dispersion measurement.

There is provided a chromatic dispersion measurement method and system for characterizing an optical fiber link under test. From a proximal end of the optical fiber link, at least one OTDR acquisition is performed, wherein each OTDR acquisition is performed by propagating in the optical fiber link under test, at least one test signal comprising a plurality of light pulses in accordance with a known sequence of pulses and detecting corresponding return light signal from the optical fiber link so as to obtain a trace representing backscattered and reflected light as a function of distance in the optical fiber link under test, and wherein said test signals have mutually different wavelengths. For each test signal and corresponding wavelength, a position of the reflective peak associated with a remote end of the optical fiber link is extracted from the return light signal by calculating a cross-correlation between the known sequence of pulses and the acquired trace. A value of a chromatic dispersion coefficient associated with said optical fiber link is then calculated from values of the extracted positions and corresponding wavelengths.

There is also provided a chromatic dispersion measurement system and method for characterizing an optical fiber link under test. From a proximal end of the optical fiber link, a set of OTDR acquisitions are performed for a corresponding set of mutually different wavelengths, wherein each OTDR acquisition is performed by propagating in the optical fiber link under test, a test signal comprising a plurality of light pulses in accordance with a known sequence of pulses and detecting corresponding return light signal from the optical fiber link so as to obtain a trace representing backscattered and reflected light as a function of distance in the optical fiber link under test, and wherein each of said OTDR acquisitions is performed with a corresponding wavelength of said test signal. For each OTDR acquisition, a position of the reflective peak associated with a remote end of the optical fiber link is extracted by calculating a cross-correlation between the known sequence of pulses and the acquired trace. For each wavelength, a value of a group delay associated with said optical fiber link is calculated from values of the extracted positions.

In accordance with another aspect, there is provided a chromatic dispersion measurement method for characterizing an optical fiber link under test, the method comprising:
from a proximal end of the optical fiber link, performing at least one OTDR acquisition,
   wherein each OTDR acquisition is performed by propagating in the optical fiber link under test, at least one test signal comprising a plurality of light pulses in accordance with a known sequence of pulses and detecting corresponding return light signal from the optical fiber link so as to obtain a trace representing backscattered and reflected light as a function of distance in the optical fiber link under test, and
   wherein plurality of test signals having mutually different wavelengths is obtained by one of: a) performing a set of OTDR acquisitions for a corresponding set of mutually different wavelengths, and b) each OTDR acquisition is performed by propagating in the optical fiber link under test, a plurality of test signals, in sequence; and
for each test signal and corresponding wavelength, extracting from the return light signal, a position of the reflective peak associated with a remote end of the optical fiber link by calculating a cross-correlation between the known sequence of pulses and the acquired trace; and
calculating a value of a chromatic dispersion coefficient associated with said optical fiber link from values of the extracted positions and corresponding wavelengths.

In some embodiments, a set of OTDR acquisitions is performed for a corresponding set of mutually different wavelengths and each of said OTDR acquisitions is performed with a corresponding wavelength of said test signal. In other embodiments, each OTDR acquisition is performed by propagating in the optical fiber link under test, a plurality of test signals, in sequence.

In some embodiments, calculating a value of a chromatic dispersion coefficient comprises, wherein for each wavelength, calculating a value of a group delay associated with said optical fiber link from values of the extracted positions and calculating a chromatic dispersion coefficient associated with said optical fiber link from values of group delay and corresponding values of wavelengths. A minimum of two mutually different wavelengths are required to derive the chromatic dispersion coefficient at one wavelength. However, in some embodiments, the OTDR acquisitions may be performed for at least three mutually different wavelengths, wherein calculating a chromatic dispersion coefficient comprises fitting a function on values of group delay and corresponding values of wavelengths. The function may correspond to the Sellmeier model of delay as a function of wavelength and the chromatic dispersion coefficient be derived from the fitted function.

In some embodiments, the known sequence of pulses may comprise a periodic equidistant repeated pulse sequence, a chirped sequence of pulses or a coded sequence of pulses.

In some embodiments, calculating a cross-correlation between the known sequence of pulses and the acquired trace may comprise cross-correlating an impulse pulse response of the known sequence of pulses and the acquired trace.

In accordance with another aspect, there is provided a chromatic dispersion measurement method for characterizing an optical fiber link under test. The method comprises:
from a proximal end of the optical fiber link, performing a set of OTDR acquisitions for a corresponding set of mutually different wavelengths,
   wherein each OTDR acquisition is performed by propagating in the optical fiber link under test, a test signal comprising a plurality of light pulses in accordance with a known sequence of pulses and detecting corresponding return light signal from the optical fiber link so as to obtain a trace representing backscattered and reflected light as a function of distance in the optical fiber link under test, and
   wherein each of said OTDR acquisitions is performed with a corresponding wavelength of said test signal; and
for each OTDR acquisition, extracting a position of the reflective peak associated with a remote end of the optical fiber link by calculating a cross-correlation between the known sequence of pulses and the acquired trace; and
calculating a value of a chromatic dispersion coefficient associated with said optical fiber link from values of the extracted positions and corresponding wavelengths.

In accordance with another aspect, there is provided a chromatic dispersion measurement system for characterizing an optical fiber link under test, the system comprising:
an OTDR acquisition device connectable toward a proximal end of the optical fiber link for performing at least one OTDR acquisition toward the optical fiber link,
   wherein each OTDR acquisition is performed by propagating in the optical fiber link under test, at least one test signal comprising a plurality of light pulses in accordance with a known sequence of pulses and detecting corresponding return light signal from the optical fiber link so as to obtain a trace representing backscattered and reflected light as a function of distance in the optical fiber link;
   wherein plurality of test signals having mutually different wavelengths is obtained by one of: a) performing a set of OTDR acquisitions for a corresponding set of mutually different wavelengths, and b) each OTDR acquisition is performed by propagating in the optical fiber link under test, a plurality of test signals, in sequence; and
a processing unit receiving the trace and configured for:
   for each test signal and corresponding wavelength, extracting from the return light signal, a position of the reflective peak associated with a remote end of the optical fiber link by calculating a cross-correlation between the known sequence of pulses and the acquired trace; and
   calculating a value of a chromatic dispersion coefficient associated with said optical fiber link from values of the extracted positions and corresponding wavelengths.

In some embodiments, a set of OTDR acquisitions is performed for a corresponding set of mutually different wavelengths and each of said OTDR acquisitions is performed with a corresponding wavelength of said test signal. In other embodiments, each OTDR acquisition is performed by propagating in the optical fiber link under test, a plurality of test signals, in sequence.

In some embodiments, the OTDR acquisition device comprises: a light generating assembly comprising a tunable laser source and pulse generator and configured to generate said test signal comprising a plurality of light pulses in accordance with the known sequence of pulses, at said mutually different wavelengths.

In some other embodiments, the OTDR acquisition device comprises: a light generating assembly comprising a plurality of laser sources having mutually different wavelengths and pulse generator, said light generating assembly being configured to generate said test signal comprising a plurality of light pulses in accordance with the known sequence of pulses, at said mutually different wavelengths.

In some other embodiments, the OTDR acquisition device comprises: a light detecting assembly comprising a light detector configured to detect light returning from said optical fiber link from said test signal for each of said OTDR acquisitions, to obtain said trace.

In some embodiments, the known sequence of pulses may comprise a periodic equidistant repeated pulse sequence, a chirped sequence of pulses or a coded sequence of pulses.

In some embodiments, calculating a value of a chromatic dispersion coefficient comprises, wherein for each wavelength, calculating a value of a group delay associated with said optical fiber link from values of the extracted positions and calculating a chromatic dispersion coefficient associated with said optical fiber link from values of group delay and corresponding values of wavelengths.

In accordance with another aspect, there is provided a chromatic dispersion measurement system for characterizing an optical fiber link under test. The system comprises:
an OTDR acquisition device connectable toward a proximal end of the optical fiber link for performing a set of OTDR acquisitions toward the optical fiber link for a corresponding set of mutually different wavelengths,
   wherein each OTDR acquisition is performed by propagating in the optical fiber link under test, a test signal comprising a plurality of light pulses in accordance with a known sequence of pulses and detecting corresponding return light signal from the optical fiber link so as to obtain a trace representing backscattered and reflected light as a function of distance in the optical fiber link;
   wherein each of said OTDR acquisitions are performed with a corresponding wavelength of said test signal; and
a processing unit receiving the trace and configured for:
   for each OTDR acquisition, extracting a position of the reflective peak associated with a remote end of the optical fiber link by calculating a cross-correlation between the known sequence of pulses and the acquired trace; and
   calculating a value of a chromatic dispersion coefficient associated with said optical fiber link from values of the extracted positions and corresponding wavelengths.

In some embodiments, a periodic equidistant repeated pulse sequence (R-P) is used. In other embodiment, a non-periodic sequence is used such as a chirped sequence (e.g., the C-sequence described herein below) or a coded sequence (e.g., the H-sequence described herein below).

In accordance with another aspect, there is provided a chromatic dispersion measurement method for characterizing an optical fiber link under test, the method comprising:
from a proximal end of the optical fiber link, performing at least one OTDR acquisition,
   wherein each OTDR acquisition is performed by propagating in the optical fiber link under test, in sequence, a plurality of test signals each comprising at least one light pulse and detecting corresponding return light signal from the optical fiber link so as to obtain a trace representing backscattered and reflected light as a function of distance in the optical fiber link under test, and
   wherein said plurality of test signals have mutually different wavelengths; and
for each test signal and corresponding wavelength, extracting from the return light signal, a position of the reflective peak associated with a remote end of the optical fiber link; and
calculating a value of a chromatic dispersion coefficient associated with said optical fiber link from values of the extracted positions and corresponding wavelengths.

In this specification, unless otherwise mentioned, word modifiers such as "substantially" and "about" which modify a value, condition, relationship or characteristic of a feature or features of an embodiment, should be understood to mean that the value, condition, relationship or characteristic is defined to within tolerances that are acceptable for proper operation of this embodiment in the context its intended application.

In the present description, and unless stated otherwise, the terms "connected", "coupled" and variants and derivatives thereof refer to any connection or coupling, either direct or indirect, between two or more elements. The connection or coupling between the elements may be mechanical, physical, operational, electrical or a combination thereof.

In the present description, the terms "light" and "optical" are used to refer to radiation in any appropriate region of the electromagnetic spectrum. More particularly, the terms "light" and "optical" are not limited to visible light, but can include, for example, the infrared wavelength range.

Further features and advantages of the present invention will become apparent to those of ordinary skill in the art upon reading of the following description, taken in conjunction with the appended drawings.

The following description is provided to gain a comprehensive understanding of the methods, apparatus and/or systems described herein. Various changes, modifications, and equivalents of the methods, apparatuses and/or systems described herein will suggest themselves to those of ordinary skill in the art. Description of well-known functions and structures may be omitted to enhance clarity and conciseness.

Although some features may be described with respect to individual exemplary embodiments, aspects need not be limited thereto such that features from one or more exemplary embodiments may be combinable with other features from one or more exemplary embodiments.

### BRIEF DESCRIPTION OF THE DRAWINGS

Fig. 1 is a block diagram illustrating a chromatic dispersion measurement system, in accordance with a single ended embodiment.
Fig. 2 is a graph illustrating an OTDR trace obtained from a corresponding OTDR acquisition, in accordance with an OTDR pulse-delay method.
Fig. 3 is graph illustrating a set of OTDR traces acquired with varying wavelengths and superimposed on the same graph, in accordance with an OTDR pulse-delay method.
Fig. 4 is graph showing an example of a set of OTDR traces acquired with varying wavelengths and superimposed on the same graph, in accordance with an OTDR pulse-delay method.
Fig. 5 is a graph showing the relative group delay (RGD) as a function of wavelength as obtained from the reflective peaks 16 of Fig. 4.
Fig. 6 is a graph showing the chromatic dispersion as a function of wavelength as obtained from the reflective peaks 16 of Fig. 4.
Fig. 7 is a block diagram illustrating a chromatic dispersion measurement device based on a tunable OTDR acquisition device, in accordance with one embodiment.
Fig. 8 is a block diagram illustrating a chromatic dispersion measurement device based on a multi-source OTDR acquisition device, in accordance with one embodiment.
Fig. 9 is a graph illustrating a binary sequence of pulses for use in the repeated pulse method, in accordance with one embodiment.
Fig. 10 comprises Fig. 10A and Fig. 10B, which are graphs illustrating OTDR acquisition traces obtained with a first FUT, wherein Fig. 10A illustrates a result obtained with the conventional single pulse group delay method, whereas Fig. 10B illustrates a result obtained with the repeated pulse method.
Fig. 11 comprises Fig. 11A and Fig. 11B, which are graphs illustrating OTDR acquisition traces obtained with a second FUT, wherein Fig. 11A illustrates a result obtained with the conventional single pulse group delay method, whereas Fig. 11B illustrates a result obtained with the repeated pulse method.
Fig. 12 comprises Fig. 12A and Fig. 12B, which are close-ups of the graph of Fig. 10B, wherein Fig. 12B is a closer close-up than Fig. 12A.
Fig. 13 comprises Fig. 13A and Fig. 13B, which are close-ups of the graph of Fig. 11B, wherein Fig. 13B is a closer close-up than Fig. 13A.
Fig. 14 is a flow chart illustrating the signal processing applied to each OTDR acquisition in order to extract the position of the reflective peak associated with a remote end of the FUT.
Fig. 15 is a graph showing an example of a processed trace resulting from the signal processing illustrated in Fig. 14.
Fig. 16 comprises Fig. 16A, Fig. 16B and Fig. 16C, which are close-ups of the graph of Fig. 15, wherein Fig. 16A is zoomed on the 5 to 6 km range, Fig. 16B is zoomed on the 5.44 to 5.54 km range and Fig. 16C is zoomed on the 5.485 to 5.498 km range.
Fig. 17 comprises Fig. 17A, Fig. 17B and Fig. 17C, which are graphs illustrating an example acquisition using a C-sequence, wherein Fig. 17A shows the sequence of pulse, Fig. 17B shows the result of a cross-correlation obtained with the sequence of Fig. 17A on a linear scale, and Fig. 17C shows the result of an autocorrelation obtained with the sequence of Fig. 17A, on a logarithmic scale.
Fig. 18 comprises Fig. 18A, Fig. 18B and Fig. 18C, which are graphs illustrating an example acquisition using an H-sequence, wherein Fig. 18A shows the sequence of pulse, Fig. 18B shows the result of a cross-correlation obtained with the sequence of Fig. 18A on a linear scale, and Fig. 18C shows the result of an autocorrelation obtained with the sequence of Fig. 18A, on a logarithmic scale.
Fig. 19 is a schematic illustrating the construction of the C-Sequence.
Fig. 20 is a schematic illustrating the construction of the H-Sequence.
Fig. 21 comprises Fig. 21A and Fig. 21B, which are graphs showing an example of a processed trace resulting from the C-sequence of Fig. 19, where Fig. 21B is a close-up of the graph of Fig. 21A.
Fig. 22 comprises Fig. 22A and Fig. 22B, which are graphs showing an example of a processed trace resulting from the C-sequence of Fig. 20, where Fig. 22B is a close-up of the graph of Fig. 22A.
Fig. 23 is a graph illustrating a pulsed Golay complementary code set of length 32.
Fig. 24 is a graph illustrating the result of an autocorrelation obtained with the sequence of Fig. 23.
Fig. 25 is a schematic illustrating the construction of a Golay complementary code set.
Fig. 26 is a schematic illustrating the processing of the OTDR trace acquired using the Golay complementary code set of Fig. 25.
Fig. 27 comprises Fig. 27A, Fig. 27B and Fig. 27C, which are graphs showing examples of acquired OTDR traces using the Golay complementary code set of Fig. 25, where Fig. 27A shows OTDR traces S_{OTDR} A₊ and S_{OTDR} A-, Fig. 27B shows OTDR traces S_{OTDR} B₊ and S_{OTDR} B₋ and Fig. 27C is a close-up of Fig. 27A.
Fig. 28 is a graph showing the processed trace resulting from the traces of Fig. 27.
Fig. 29 is a flowchart illustrating a chromatic dispersion measurement method, in accordance with one embodiment.
Fig. 30 is a graph illustrating the results of an initial OTDR acquisition in accordance with step 1 of Fig. 29.
Fig. 31 comprises Fig. 31A, Fig. 31B and Fig. 31C, which are tables showing the PNR gain obtained at exemplary number of pulses, wherein Fig. 31A corresponds to the repeated pulse method, Fig. 31B corresponds to the coded correlation Hadamard and Fig. 31C corresponds to the Golay code.
Fig. 32 comprises Fig. 32A and Fig. 32B, which are schematics illustrating a multi-wavelength acquisition method, in accordance with one embodiment, wherein Fig. 32A illustrates the acquisition frame and Fig. 32B illustrates the return light signal.
Fig. 33 is a graph illustrating a multi-wavelength acquisition method, in accordance with another embodiment which combines the multi-wavelength acquisition method of Fig. 32 with a sequence of pulses.
Fig. 34 is a block diagram illustrating a chromatic dispersion measurement system, in accordance with a dual ended embodiment.
Fig. 35 is a block diagram illustrating a light source device of the chromatic dispersion measurement system of Fig. 34, in accordance with one embodiment.
Fig. 36 is a block diagram illustrating a receiver device of the chromatic dispersion measurement system of Fig. 34, in accordance with one embodiment.
Fig. 37 is a block diagram illustrating an example architecture of an OTDR device of the system of Fig. 7 or 8.
Fig. 38 is a block diagram illustrating an example architecture of an OTDR acquisition device of the OTDR device of Fig. 37.

It will be noted that throughout the drawings, like features are identified by like reference numerals. In the following description, similar features in the drawings have been given similar reference numerals and, to not unduly encumber the figures, some elements may not be indicated on some figures if they were already identified in a preceding figure. It should be understood herein that elements of the drawings are not necessarily depicted to scale, since emphasis is placed upon clearly illustrating the elements and structures of the present embodiments. Some mechanical or other physical components may also be omitted in order to not encumber the figures.

### DETAILED DESCRIPTION

OTDR is a diagnostic technique for optical fiber links where a test signal in the form of light pulses is launched in the optical fiber link under test and the return light signal, arising from backscattering and reflections along the link, is detected. Herein, the process of launching a test signal and acquiring the return light signal to obtain therefrom an OTDR trace is referred to as an "OTDR acquisition". The acquired power level of the return light signal as a function of time is referred to as an "OTDR trace" or a "reflectometric trace", where the time scale is representative of distance between the OTDR acquisition device and a point along the fiber link. Light acquisitions may be repeated with varied wavelengths of the test signal to produce a set of OTDR traces for a corresponding set of wavelengths.

Although an OTDR trace is typically referred to as a function representing backscattered and reflected light as a function of "distance" in the optical fiber link under test, what is actually measured during an OTDR acquisition is the return light as a function of time. OTDR data is therefore sampled on the time scale, with a fixed sampling period Δt determined by the sampling circuit. In the present description, the sampled OTDR data is represented in a one-dimensional array wherein Trace_{λn}(i) represents the sampled OTDR trace value data at index i and wherein the time scale can be retrieved as i x Δt. Of course, other representations may be envisaged without departing from the invention.

One skilled in the art will readily understand that in the context of OTDR methods and systems, each light acquisition generally involves propagating a large number of substantially identical light pulses in the optical fiber link and averaging the results. In this case, the result obtained from averaging will herein be referred to as an OTDR trace. It will also be understood that other factors may need to be controlled during the light acquisitions or from one light acquisition to the next, such as gain settings, pulse width, pulse power, etc. as is well known to those skilled in the art.

"Backscattering" refers to Rayleigh scattering occurring from the interaction of the travelling light with the optical fiber media all along the fiber link, resulting in a generally sloped background light (in logarithmic units, i.e. dB, on the ordinate) on the OTDR trace, whose intensity disappears at the end of the range of the travelling pulse. "Events" along the fiber will generally result in a more localized drop of the backscattered light on the OTDR trace, which is attributable to a localized loss, and/or in a localized reflection peak. It will be understood that an "event" may be generated by any perturbation along the fiber link which affects the returning light. Typically, an event may be generated by an optical fiber splice along the fiber link, which is characterized by a localized loss with little or no reflection. Mating connectors can also generate events that typically present reflectance, although these may be impossible to detect in some instances. Here, for CD measurement, the only event of interest is the reflective event corresponding to remote reflective end of the fiber 14, which manifests as a strong reflective peak.

Now referring to the drawings, the OTDR pulse-delay method is described briefly. More details on known OTDR pulse-delay methods can be found, e.g., in TIA Standard no. TIA-455-175-B and Page et al. "Measuring chromatic dispersion of optical fiber using time-of-flight and a tunable multi-wavelength semiconductor fiber laser", Optics Communications, Vol. 265, pp. 161-170 (2006).

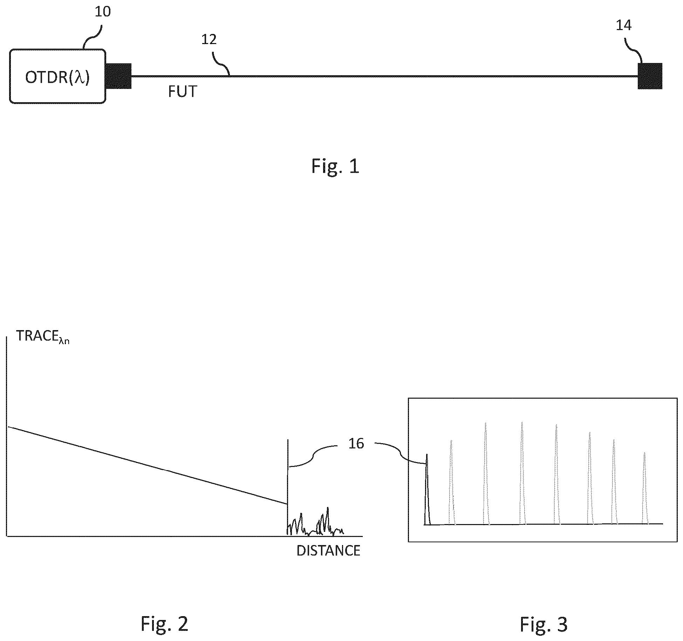

Figs. 1 ,2 and 3 illustrate the Chromatic Dispersion (CD) measurement principle of the OTDR pulse-delay method. As shown in Fig. 1, a tunable or multi-wavelength OTDR device 10 is used to perform OTDR acquisitions toward the optical Fiber link Under Test (FUT) 12 from a proximal end thereof. The remote end of the FUT 12 is terminated by a reflective end of the fiber 14 such as a mirror or non-angled polished (UPC) connector, which creates a reflective peak 16 on acquired OTDR traces.

For CD measurement, a set of OTDR acquisitions are performed for a corresponding set of mutually different wavelengths. Fig. 2 illustrates one OTDR trace obtained from a corresponding OTDR acquisition of the set. It also shows the presence of a reflective peak 16 corresponding to the remote reflective end of the fiber 14. Of course, a similar OTDR trace is obtained for each wavelength.

For each OTDR acquisition, a test signal is propagated in the FUT 12. The test signal comprises a least one light pulse. An OTDR trace is obtained by detecting corresponding return light signal from the FUT 12, which trace represents backscattered and reflected light as a function of distance in the FUT 12.

Due to CD, the position of the reflective peak 16 in the OTDR trace varies with the acquisition wavelength. Although the length of the FUT 12 does not change, a variation of the group delay in FUT 12 as a function of wavelength causes a variation in the travel time of the test signal in the FUT 12. The position of the reflective peak 16 in the acquired OTDR trace therefore varies with the acquisition wavelength.

Fig. 3 illustrates a set of OTDR traces acquired with varying wavelengths and superimposed on the same graph, but wherein the graph shows a close-up of the portion of the OTDR traces that corresponds to the remote reflective peak 16. Fig. 3 illustrates the varying position of the reflective peak 16 for varying acquisition wavelengths.

As explained hereinabove, an OTDR trace is typically referred to as a function representing backscattered and reflected light as a function of "distance" in the optical fiber link under test. But what is actually measured during an OTDR acquisition is the return light as a function of time. OTDR data is therefore sampled on the time scale, with a fixed sampling period Δt determined by the sampling circuit. It is noted that some of the graphs in the present drawings show OTDR traces expressed on a distance scale. It is noted that such pseudo-distance scale is actually fictitious and obtained by assuming that all OTDR traces were acquired at a giving nominal wavelength (which is not true), which nominal wavelength corresponds to a given conversion factor from the time scale to a distance scale given as: $D = c \times i \times Δt / \left(2\times {n}_{eff}\right)$ (1) wherein i is the acquisition index, D is the distance along the tested optical fiber link, c is the light speed in vacuum (3x10⁸ m/s) and n_{eff} is the optical fiber effective refractive index (1.4679) at the nominal wavelength. The factor 2 is used to account for the round trip of light in the fiber.

Therefore, due to CD, the position of the reflective peak 16 in the OTDR trace (as expressed on an index or pseudo-distance scale) varies with the acquisition wavelength. But it will be understood that the real distance of the reflective peak 16 from the proximal end of the FUT 12 does not actually vary.

Put more simply, the travel time or time-of-flight (TOF) corresponding to the reflective peak 16 may be obtained as: $TOF = {i}_{c} \times Δt$ (2) wherein i_{c} is the position of the centroid of the reflective peak 16 on the index scale.

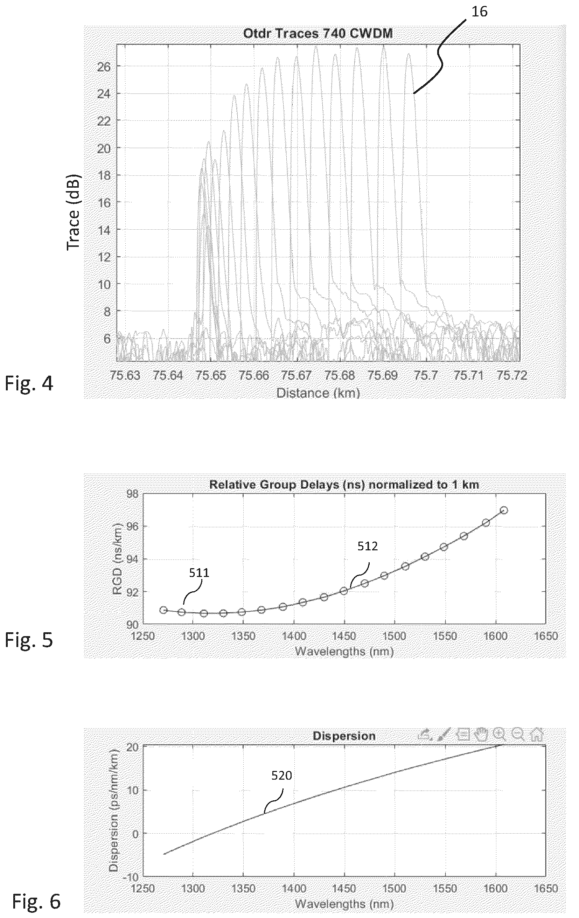

Referring to Figs. 4, 5 and 6, the group delay as a function of wavelength may be calculated by comparing the varying travel times obtained at varying wavelengths and the chromatic dispersion coefficient can be deduced therefrom.

Fig. 4 shows an example of a set of OTDR traces as acquired with varying wavelengths and superimposed on the same graph. Again, the graph shows a closeup (distance scale from 75,63 to 75,72 km) on the portion of the OTDR traces that corresponds to the remote reflective peak 16 caused by the remote reflective end of the fiber 14. As see in Fig. 4, due to CD, the position of the reflective peak 16 varies for varying acquisition wavelengths. As explained hereinabove, the graph actually represents OTDR traces as expressed on an index scale that was converted to a pseudo-distance. For each OTDR acquisition wavelength, the position of reflective peak 16 indicates the round-trip travel time or time-of-flight of the pulsed test signal from the proximal end to remote end of the optical fiber.

The position of each reflective peak 16 is therefore indicative of the relative group delay (RGD) associated with the corresponding wavelength: $RGD \left({λ}_{n}\right) = TOF \left({λ}_{n}\right) / \left(2\times L\right)$ (3) wherein L is the length of the fiber 14 from the proximal end to the remote end, which, for any nominal wavelength, can be obtained as: $L = c \times TOF / \left(2\times {n}_{eff}\right)$ (4) wherein n_{eff} is the optical fiber effective refractive index (1.4679) at the nominal wavelength λₙₒₘ.

It is noted that a minimum of two mutually different wavelengths are required to derive the chromatic dispersion coefficient at one wavelength. However, in some embodiments, the chromatic dispersion coefficient may be obtained by fitting a model (such as the Sellmeier model) on values of group delay and corresponding values of wavelengths and deriving the chromatic dispersion coefficient from the fitted model.

Fig. 5 shows the relative group delay (RGD) as a function of wavelength as obtained from the reflective peaks 16 of Fig. 4 and equation (3) herein above. The dots represent the data points RGD(λₙ) as obtained for each acquisition wavelength.

The data points for each wavelength are shown as the dots 511 in Fig. 5. A curve 512 may be fitted using, e.g., a least square fit or any other regression method. For a given type of optical fiber, the general shape of the relative group delay (RGD) is typically known. For example, for SMF-28 fibers, a Sellmeier model may be used to obtain representative fit: $τ \left(λ\right) \approx \frac{1}{8} {S}_{0} \left[{λ}^{2}+\frac{{{λ}_{0}}^{4}}{{λ}^{2}}\right] ps / km$ (5) $CD \left(λ\right) \approx \frac{1}{4} {S}_{0} \left[λ-\frac{{{λ}_{0}}^{4}}{{λ}^{3}}\right] ps / \left(nm⋅km\right)$ (6)

Equation (5) represents the Sellmeier model for the group delay τ(λ) as a function of wavelength for SMF-28 fibers, wherein S₀ and λ₀ are parameters to be adjusted by regression.

Equation (6) represents the Sellmeier model for the chromatic dispersion CD(λ) as a function of wavelength for SMF-28 fibers, wherein S₀ and λ₀ are parameters to be adjusted by regression. Equation (6) can be obtained from the derivative of equation (5) at λ.

Then, from the parameters S₀ and λ₀ obtained from the fitted function, the chromatic dispersion curve CD(λ) can be computed from equation (6) and is shown in Fig. 6.

It is noted that, although the Sellmeier model may be preferred in the case of SMF-28 fibers, other models may be used as well for the fit, such as, e.g., any of the following:

**Table 1**

| **Models and Equations** |
|---|
| Quadratic |
| *τ*(*λ*) *= A + Bλ+Cλ*² |
| *S*₀ *= 2C λ*₀ *= -B*/*(2C)* |
| Cubic |
| *τ*(*λ*) *= A + Bλ+Cλ*²+ *Dλ*³ |
| 4th order polynomial |
| *τ*(*λ*) *= A + Bλ+Cλ*²*+ Dλ*³ *+ Eλ*⁴ |
| 3-term Sellmeier |
| *τ*(*λ*) *= A + Bλ*²*+Cλ*⁻² |
| *S*₀ = *8B λ*₀ = *(C*/*B)*^{1/4} |
| 5-term Sellmeier |
| *τ*(*λ*) = *A + Bλ*²*+Cλ*⁻²*+ Dλ*⁴ *+ Eλ*⁻⁴ |

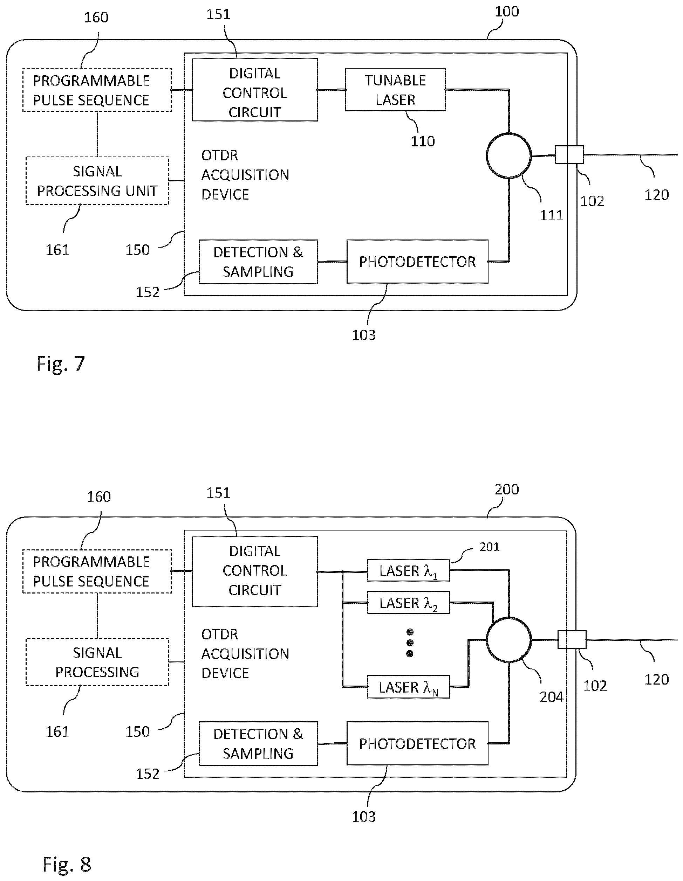

Fig. 7 illustrates a chromatic dispersion measurement device 100 based on an OTDR acquisition device 150, in accordance with one embodiment. In the embodiment of Fig. 7, OTDR acquisitions can be obtained for varying wavelengths using a tunable laser source 110. The device 100 comprises a tunable laser source 110, a directional couple or circulator 111, an optical connector 102 connected to the FUT 120, a photodetector 103 , such as a photodiode, an avalanche photodiode (APD) or any other suitable photodetector, an acquisition system 152 to sample the detected signal, a controller or signal processing unit 161 to analyze the data, a laser digital control circuit 151 (implemented, e.g., as a Field Programmable Gate Array (FPGA)) that is piloted by a programmable pulse sequence 160 as explained in more detail in this hereinbelow.

Fig. 8 illustrates a chromatic dispersion measurement device 200 in accordance with another embodiment. The embodiment of Fig. 8 is similar to that of Fig. 7 except that the tunable laser source 110 is replaced by a series of discrete laser sources 201. The discrete laser sources 201 are coupled to the FUT 120 using a coupling device 204 such as a 1xN coupler, a Wavelength Division Multiplexer (WDM) and/or optical circulators.

Now, there is herein proposed to improve the dynamic range/acquisition time of the hereinabove described group-delay method using a technique similar to correlation coded OTDR. In short, for each OTDR acquisition, instead of launching a single OTDR pulse at a time, a sequence of pulses is used. A correlation method is then used to detect the sequence of pulses after a back-reflection from a mirror or non-angled polished (UPC) connector at the remote end of the link and extract the position of the reflective peak, from which the chromatic dispersion can be derived.

Three types of pulse sequences are considered:
- Repeated Pulse
- Coded Correlation
- Multiple Coded Sequence

It shall be noted that other approaches of coded OTDR have been proposed in the literature (such as the Simplex method, see Jones, "Using simplex codes to improve OTDR sensitivity," IEEE Photonics Technol. Lett. 5(7), 822-824(1993)). Such methods can be adapted to the methods proposed herein.

### Repeated pulse method

The dynamic range of the group delay method can be improved using a technique we named the "repeated pulse method". In the repeated pulse method, for each OTDR acquisition, a sequence (or pulse train) of periodic equidistant pulses is used.

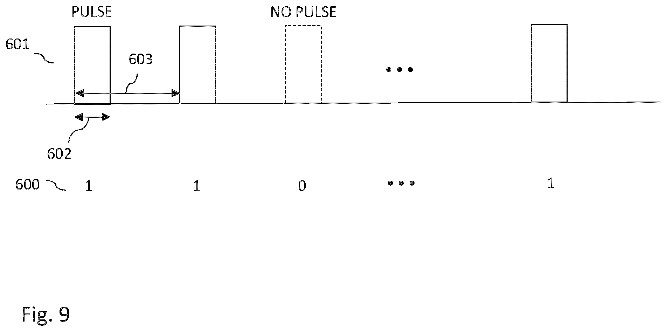

Fig. 9 illustrates a binary sequence of pulses 601. The pulse sequence is defined by a binary code sequence 600, a pulse length 602 and a pulse repetition period 603. The sequence may also be made programmable in length, and in its binary code 600.

It is noted that the repeated pulse method represents a special case of the sequence of pulses 601 of Fig. 9, in which the binary code 600 is a series of '1' and the pulse repetition period 603 is constant.

The pulse length is key for CD accuracy. A shorter pulse means less dynamic range but provides better delay accuracy. Typically, pulses of 5 to 50 ns may be found suitable, depending on the OTDR implementation.

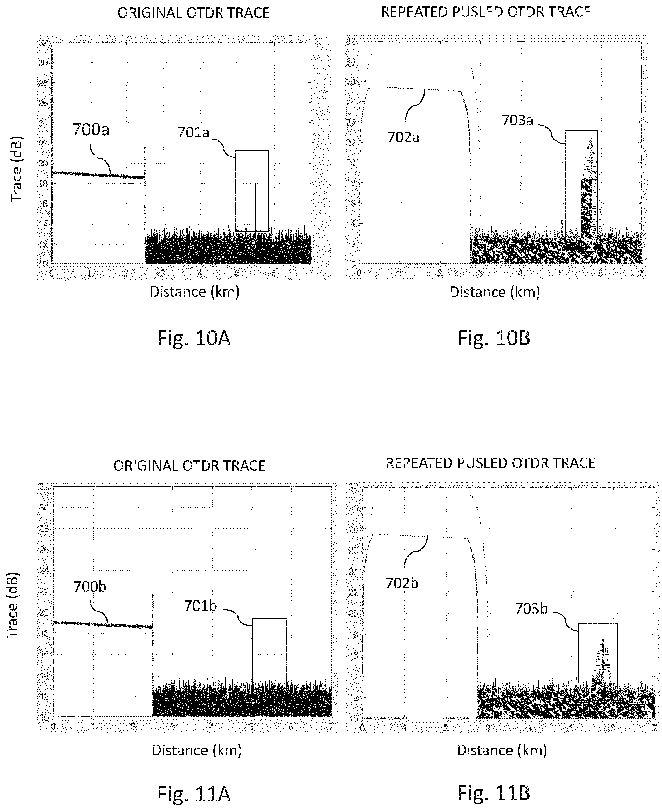

Figs. 10, 11, 12 and 13 illustrate examples of an improvement observed with the repeated pulse method (graphs on the right side) when compared to the conventional single pulse group delay method (graphs on the left side).

In the example of Fig. 10, the FUT has a length L of 5.5 km and a strong loss event at 2.5 km. The reflective peak at the end of the FUT is shown in Fig. 10 as 701a. In the example of Fig. 11, the FUT also has a length L of 5.5 km and a strong loss event at 2.5 km. However, the FUT experiences a greater insertion loss at 2.5 km. Consequently, the dynamic range of the OTDR does not allow to properly distinguish the reflective peak 701b at the end of the FUT (because it is hidden into noise).

For the graphs on the right side of Figs. 10 and 11, the repeated pulse method was used to perform the acquisition of traces 702a and 702b for one specific wavelength among a set of wavelengths. The FUT and the acquisition conditions were the same as those used for the graphs on the right side, except that the repeated pulse method was used for the acquisition. In this example, the sequence of pulse (or pulse train) comprises 50 equally spaced pulses having a pulse width of 10 ns and a pulse repetition period 603 of 50 ns. The sequence of pulses 703a is clearly visible in both the trace of Fig. 10 and that of Fig. 11 (right side), although the SNR is lower in Fig. 11.

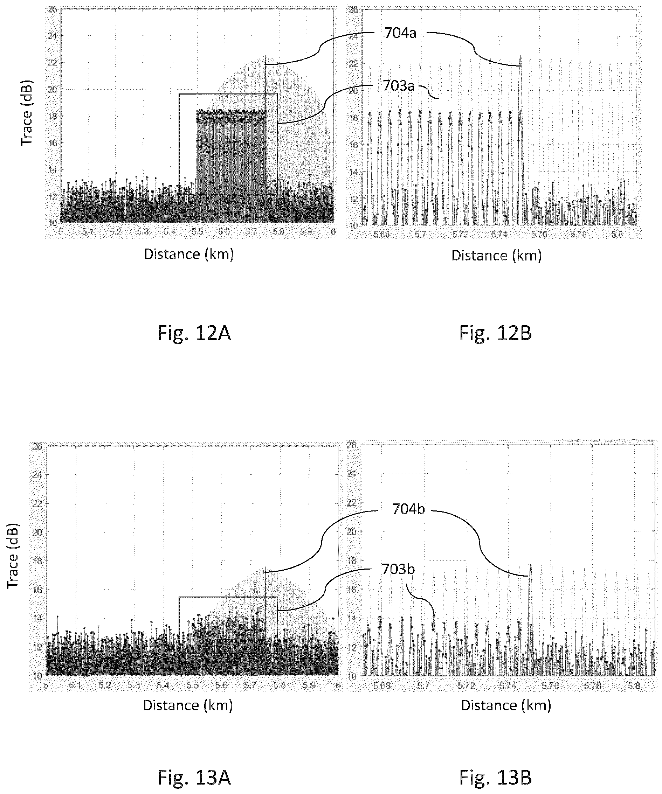

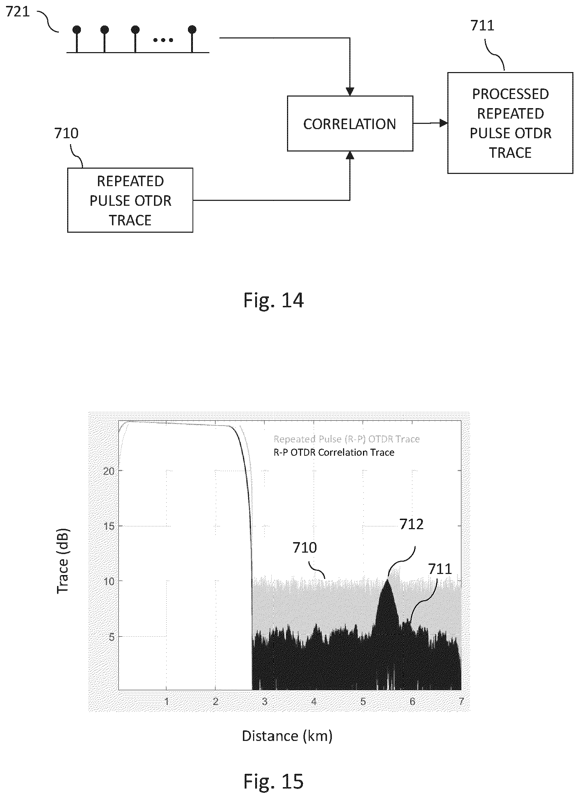

Figs. 12 and 13 are closeups on the right-side graphs of Figs. 10 and 11, respectively. They illustrate that in order to improve the SNR, all pulses 703a / 703b may be added up, wherein the added pulses are shown as peaks 704a and 704b. These pulses were obtained by adding up 50 translated versions of the acquired trace in steps corresponding to the repetition period. This process can be regarded as a cross-correlation of the acquired trace with the sequence of pulses (as illustrated in Fig. 14).

Using such repeated pulse method, the SNR can be improved by a factor that is proportional to the square root of the number of pulses: ${SNR}_{Gain} = \sqrt{{N}_{Pulses}}$ (7)

In the illustated example, SNR is therefore improved with a factor of 4.25 dB (the square root of 50). Note that in OTDR display, we need to take into account the round trip of light in the FUT, i.e.: ${SNR}_{Gain} = 5 ⋅ {log}_{10} \sqrt{{N}_{Pulses}} \left(dB\right)$ (8)

This gain can be used to increase the dynamic range of the instrument, or to reduce the measurement time for each acquisition (each wavelength). Of course, for chromatic dispersion measureemnt, this repeated pulse method needs to be repeated for each wavelength of a set.

Fig. 14 illustrates the signal processing to be applied to each OTDR acquisition in order to extract the position of the reflective peak associated with a remote end of the FUT (to be repeated for each wavelength of a set). The result of such signal processing is illustrated in Fig. 15 which shows the acquired OTDR trace 710 is grey, as well as the processed trace 711 in black, including the position of the reflective peak 712.

The processing method calculates a cross-correlation of the acquired OTDR trace 710 as obtained with a sequence of repeated pulses, with the sequence of pulse 601 used to generate the OTDR test signal: $\left(f⋆g\right) \left[n\right] ≜ {\sum }_{m = - ∞}^{∞} \overline{f \left[m\right]} g \left[m+n\right]$ (9) wherein f represents the acquired OTDR trace 710 and g represents the sequence of pulse 601.

As illustrated in Fig. 14, in some embodiments, the cross-correlation is calculated using, as f, the acquired OTDR trace 710 and, as g, an impulse pulse sequence 721 corresponding the sequence of pulse 601.

This process yields a processed repeated pulse trace 711 (see Fig. 15) from which the position of the reflective peak 712 can be extracted, e.g., as the position of the maximum correlation peak of the repeated pulse trace 711.

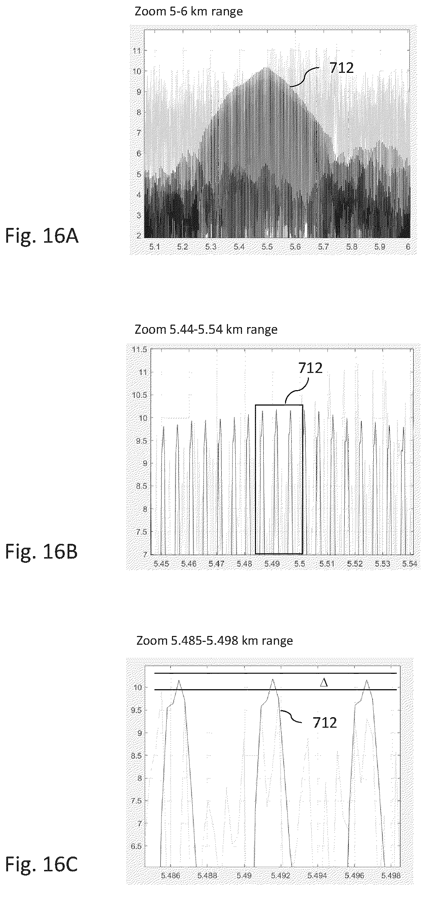

Fig. 16 shows close-ups on the processed repeated pulse trace 711. It illustrates that, with the repeated pulse method, the position of the reflective peak 712 is not very clearly defined and may be prone to some error. The larger the number of pulses in the sequence of pulse, the smaller the amplitude difference between the maximum correlation peak and its adjacent peaks: $Δ = 5 ⋅ {log}_{10} \left[1+\frac{1}{{N}_{Pulses}}\right] \left(dB\right)$ (10)

It is noted that some techniques may be used to help in extracting the position of the reflective peak 712. For example, the sequence of pulse may be slightly modified so that it is not purely repetitive. Any unrepetitive feature will provide a gain in the amplitude difference between the maximum correlation peak and its adjacent peaks.

As shown hereinabove, extraction of the maximum correlation peak in the processed repeated pulse trace 711 obtained from the pure repeated pulse method (periodic equidistant pulses) may be difficult in low SNR conditions because the low amplitude difference between the maximum correlation peak and its adjacent peaks. A pulse sequence that would minimize the amplitude of the adjacent peaks would improve the peak detection.

One characteristic of a sequence of pulse used in an OTDR acquisition is the level of the sidelobes that will be generated by the correlation detection. These sidelobes levels can be managed using different methods. For example, a periodic equidistant repeated pulse sequence represents the worst case and leads to difficult peak selection. One advantage of the repeated pulse sequence is that it provides a good SNR for a given sequence length. Thus, when constructing sequences, a tradeoff shall be made between the SNR, sidelobes, and the sequence length.

The following methods may be used to improve peak detection and consist of variations of the repeated pulse method.

### Coded correlation method

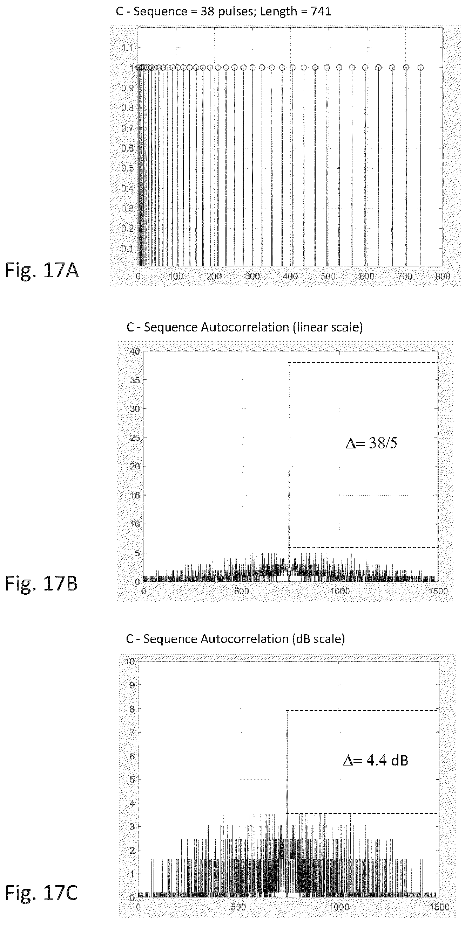

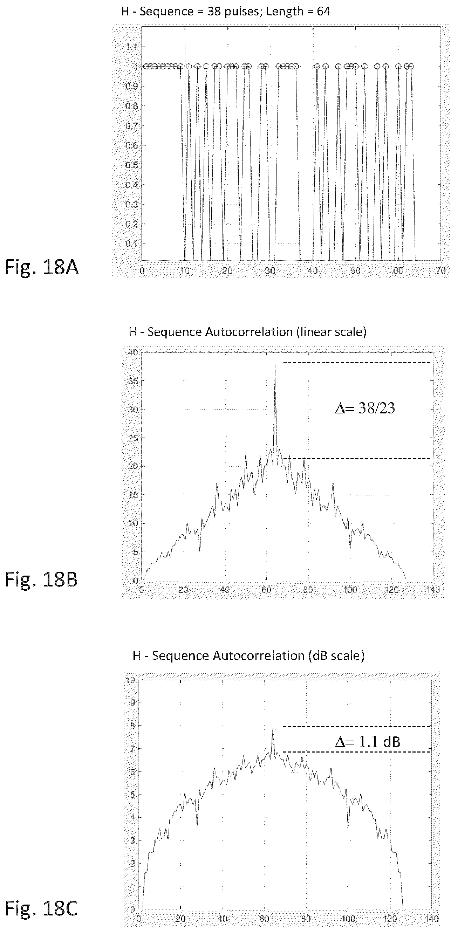

Figs. 17 and 18 show two examples of sequences of pulse, i.e., the C-sequence and the H-sequence. Both sequences use the same number of pulses, i.e., 38. Figs. 17A and 18A illustrate the sequence of pulse. Figs. 17B and 18B show the result of a cross-correlation obtained with the sequences of Figs. 17A and 18A, respectively, on a linear scale. Figs. 17C and 18C show the result of an autocorrelation obtained with the sequences of Figs. 17A and 18A, respectively, on a dB scale.

It shows that the correlation peak to sidelobe ratio is 4.4 dB for C-sequence is 4.4 dB and 1.1 dB for the H-sequence. However, the C-sequence has a length of 741, which is more than 10 times longer than the H-Sequence which has a length of 64 and is therefore a lot more compact. This ratio 1.1 dB represents a substantial improvement compared to the repeated pulse method.

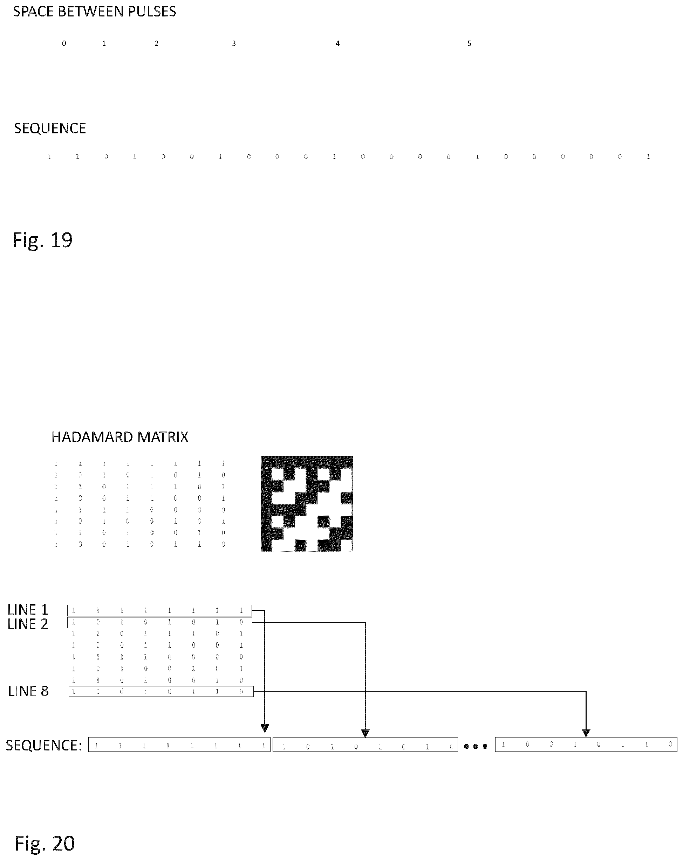

Fig. 19 illustrates the construction of the C-Sequence. This sequence is chirped in that the pulses are increasing in distance in an ascending order.

Fig. 20 illustrates the construction of the H-Sequence which is based on the Hadamard Matrix. The sequence is built by concatenating the lines of the Hadamard Matrix.

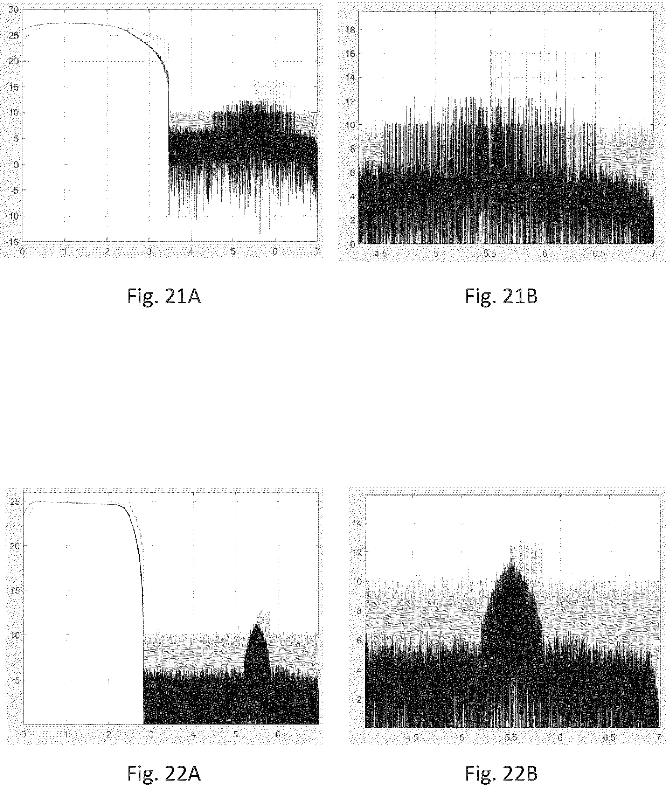

Fig. 21 shows an example of a processed repeated pulse trace as obtained using the C-Sequence described hereinabove, as applied to detecting the remote reflective peak caused by the remote reflective end of the FUT, whereas Fig. 22 shows an example of a processed repeated pulse trace as obtained using the H-Sequence described hereinabove.

It is noted that, compared to the H-Sequence, C-Sequence has the advantage of exhibiting a good peak to sidelobe ratio but the disadvantage of being longer (less compact).

As to the H-Sequence, despite exhibiting a lower peak to sidelobe ratio, it is a lot more compact. So, for a length equivalent to the C-Sequence, the H-Sequence would provide more dynamic gain improvement.

### Multiple coded sequence method

In the context of coded correlation OTDRs, there exist some methods in the literature to remove the correlation sidelobes by adding a layer of complexity (see M. Nazarathy et al., "Real-time long range complementary correlation optical time domain reflectometer," J. Lightwave Technol. 7(1), 24-38(1989) and Sischka et al., "Complementary Correlation Optical Time-Domain Reflectometry", Dec 1988 HEWLETT-PACKARD JOURNAL). These techniques may be adapted to detect the remote reflective peak in the context of CD measurement.

Instead of having only one sequence, the correlations secondary peaks can be eliminated using complementary correlation coded Golay sequences.

A complementary correlation Code set is defined as a set of two codewords. For examples A and B, each L bits long, are said to be complementary if the sum of the autocorrelations of all the codewords is zero for all nonzero shifts, i.e.: $2 L δ = A ∗ A + B ∗ B = 0$ (11)

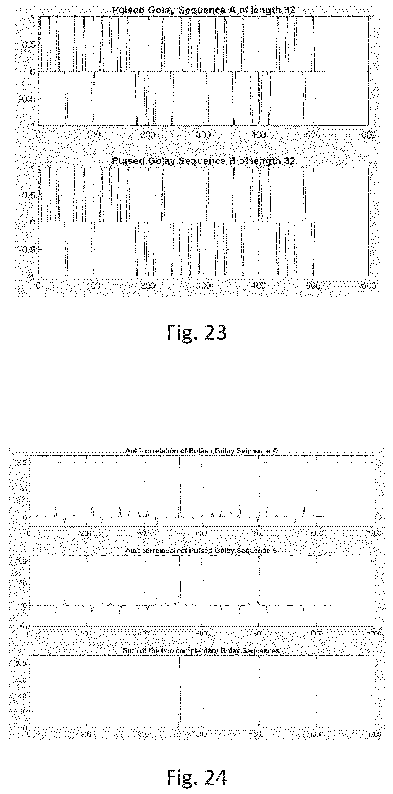

A pulsed version of a Golay Complementary code set of length 32 is shown in the Fig. 23 and the resulting autocorrelation is shown in Fig. 24.

Since OTDR is a unipolar device (power is always positive), the Goaly bipolar sequences A and B may be transformed in four unipolar sequences as follows: ${A}_{1} = \frac{1 + A}{2} , {A}_{2} = \frac{1 - A}{2} , {B}_{1} = \frac{1 + B}{2} , {B}_{2} = \frac{1 - B}{2} .$ (12)

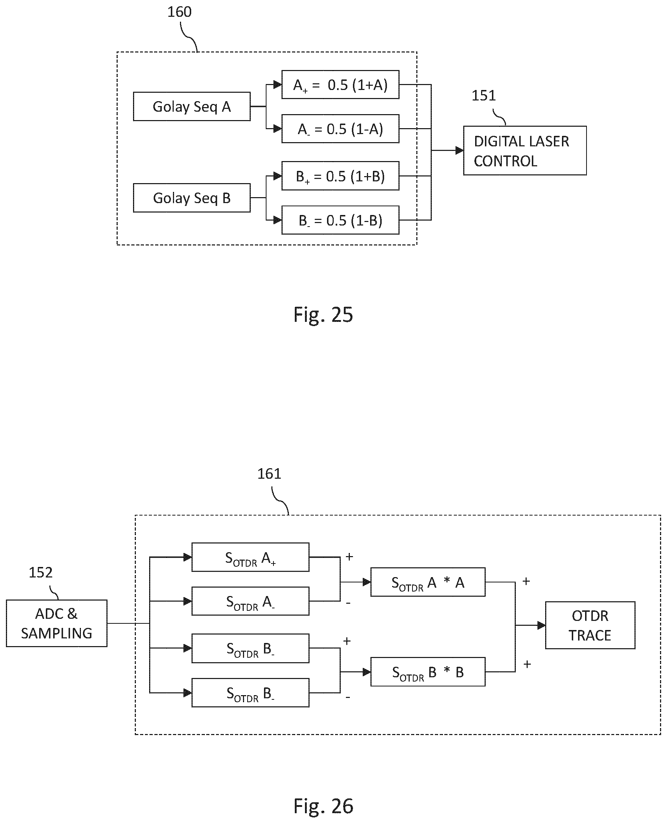

As illustrated in Fig. 25, the Golay pair sequences A and B are transformed in unipolar codes A₁, A₂, B₁, B₂ that are each sequentially propagated in the FUT using the programmable pulse sequence 160 and the digital control circuit 151.

As illustrated in Fig. 26, the acquisition device 150 sequentially acquires a OTDR trace for each of these unipolar codes, which OTDR traces are processed by 161.

S_{OTDR} A₊ and S_{OTDR} A₋ are acquired then subtracted to provide an intermediate signal S_{OTDR} A. S_{OTDR} B₊ and S_{OTDR} B₋ are acquired then subtracted to provide an intermediate signal S_{OTDR} B.

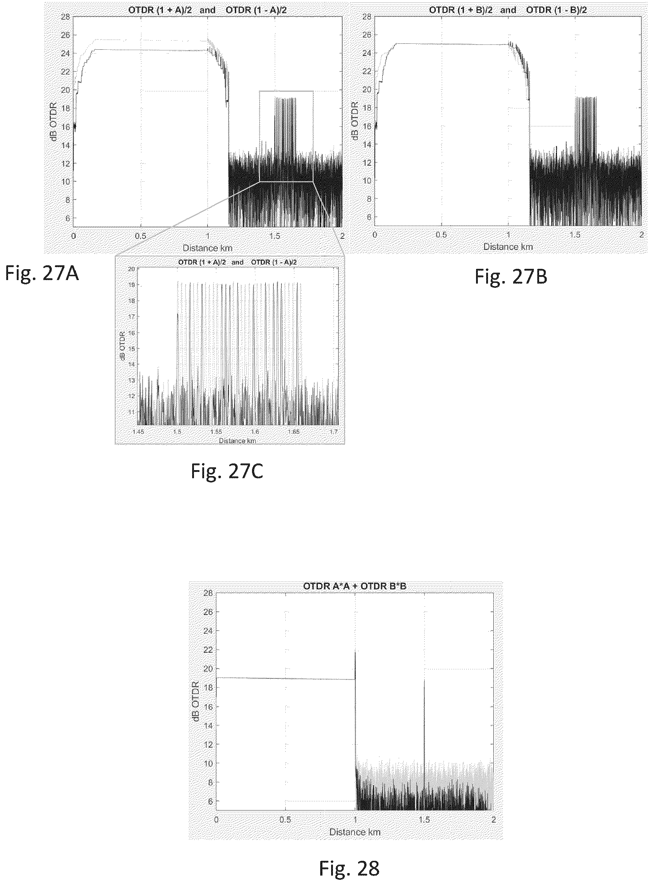

Fig. 27 shows an example of acquired OTDR traces S_{OTDR} A₊, S_{OTDR} A₋, S_{OTDR} B₊ and S_{OTDR} B₋.

S_{OTDR} A is then correlated with the transmitted sequence A. S_{OTDR} B is then correlated with the transmitted sequence B. The sum of these correlated traces yields a processed pulse trace.

Fig. 28 shows the resulting processed pulse trace (S_{OTDR} A * A) + (S_{OTDR} B * B).

The complementary correlation coded Golay sequences provides an SNR gain given by the following equation: ${SNR}_{GainCoded} = \sqrt{{L}_{Code} / 4}$ (13)

Accordingly, with a code length Lcode = 32, a gain of 2.25 dB is obtained.

It should be noted that the simple repeated pulse and coded correlation methods described hereinabove provide a gain 2x greater than that of the more complex multiple coded sequence method. Considering the more complex implementation of the complementary correlation coded Golay sequences, there are not much advantage of using then compared to the simpler repeated pulse and coded correlation methods.

It shall be noted that other approaches of coded OTDR have been proposed in the literature such as the simplex and other methods (see Jones, "Using simplex codes to improve OTDR sensitivity", IEEE Photonics Technol. Lett. 5(7), 822-824(1993), Naseem et al., "Composite coding scheme for OTDR SNR enhancement", ConTEL 2011, ISBN: 978-3-85125-161-6 and Sahu et al., "Optical time-domain reflectometer performance improvement using complementary correlated Prometheus orthonormal sequence", IET Optoelectron., 2008, Vol. 2, No. 3, pp. 128-133). These methods provide improvements compared to the Golay sequences but are also more complex and still have less gain than the simpler repeated pulse and coded correlation methods.

### Detailed steps

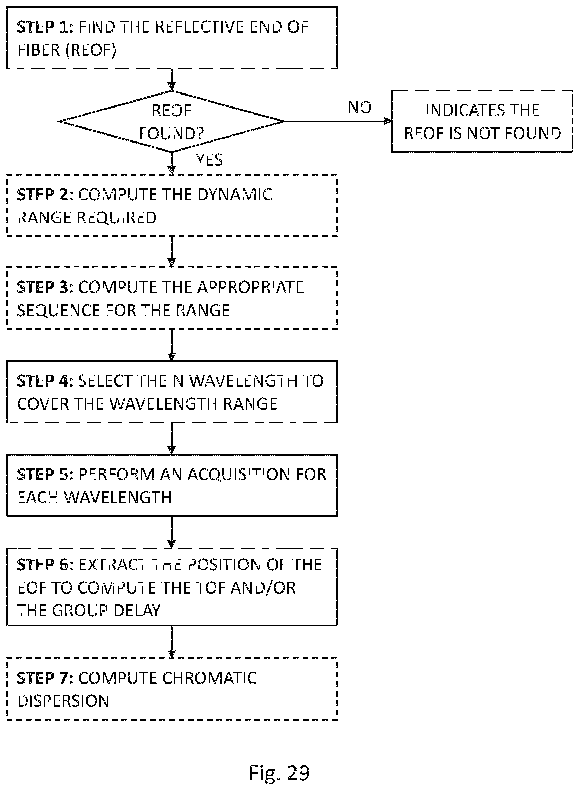

Referring to Fig. 29, the herein proposed chromatic dispersion measurement method is described in more detail.

Step 1: Find the reflective end of fiber (REOF)

In step 1, an initial OTDR acquisition is performed toward the FUT to find the reflective end of the fiber. For this initial OTDR acquisition, the wavelength that provides the best dynamic range (e.g., strongest laser output and lowest fiber attenuation) may be selected. For example, the acquisition may be performed at a wavelength of 1550 nm. This initial OTDR acquisition may be performed using a single pulse acquisition.

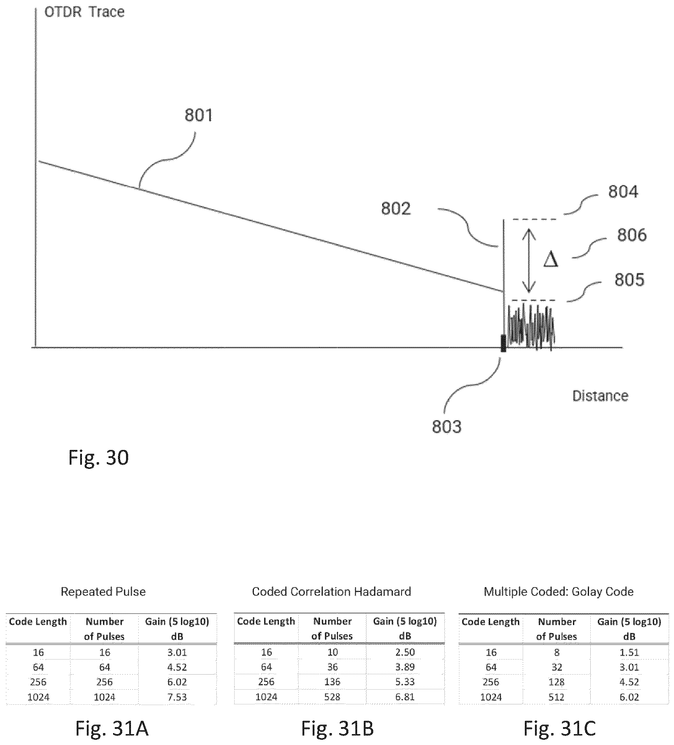

Fig. 30 illustrates the results of such initial OTDR acquisition. The reflective end of fiber (REOF) 802 is identified as the last strongest event in the trace 801. Once identified, its position 803 is used to provide an approximate position of the end of fiber event in the further OTDR traces to acquire for the chromatic dispersion measurement.

The end of fiber peak value 804 is subtracted from the noise level of the OTDR trace 805 to provide a value of the Peak to Noise Ratio (PNR) 806.

As shown in Fig. 29, if no REOF is found, then the software notifies the user accordingly and the CD measurement process is stopped.

Step 2: Compute the required dynamic range

Typically, a PNR of at least 5 is need for good quality results. The method may therefore include an optional step of adjusting the sequence of pulse as a function of the necessary PNR gain.

The target PNR gain may be computed as follows: $PNR _ gain = {PNR}_{Target} - Min \left(PNR\left(λ\right)\right)$ (14)

If equation (14) yields a required PNR gain (PNR_gain) that is less than 0, then no gain is required, and single pulse acquisitions may be used. If a PNR gain is required (the PRN needs to be improved) then a gain may be obtained using longer averaging time or a repeated pulse technique such as one of the methods described herein (repeated pulse, coded correlation or multiple coded sequence).

The remaining steps described here will assume that a repeated pulse technique is used for the OTDR acquisition.

Step 3: Compute the sequence for the range

The number of pulses Nₚᵤₗₛₑₛ of the sequence that is required for a given PNR gain is then calculated.

In the case of the repeated pulse method, the number of pulses Nₚᵤₗₛₑₛ required for a given PNR gain may be calculated as follows: ${N}_{Pulses} = {10}^{2 ⋅ PNR _ gain / 5} \left(in OTDR dB\right)$ (15)

For example, if a PNR gain of 3 dB (in OTDR dB) is required, then a code having at least 16 pulses may be used.

Fig. 31 shows the PNR gain obtained at exemplary number of pulses, for the three methods described hereinabove.

These tables list the coding gain of the 3 proposed methods. For example, let's say that the required PNR gain computed at step 2 is 4 dB, then, according to the repeated pulse table, the repeated pulse method may be used with a code length of 64 pulses.

Step 4: Select the list of N wavelengths

The wavelengths are typically selected to be uniformly distributed across the tunable OTDR range. For example, for a tunable OTDR having a wavelength range from 1500 to 1600 nm, with N = 11, then the wavelength selected are: 1500, 1510, 1520, 1530, 1540, 1550, 1560,1570, 1580, 1590, 1600 nm. Of course, uniform distribution is optional and other values may be chosen as well.

It shall be noted that in the case of a discrete laser OTDR such as that described with reference to Fig. 8, the acquisition may either be executed on all or on a subset of the OTDR discrete laser sources.

In the case of a tunable laser, the laser may be swept and stopped at each wavelength of interest, or the laser may be swept while acquisition is ongoing (see, e.g., US patent 7,920,253 to Cyr et al.). However, the next section assumes a case where the laser is stopped at each wavelength of interest.

Step 5: Perform the OTDR acquisition

If no code gain is required, a single pulse OTDR acquisition may be performed, with any appropriate average time.

If a PNR gain is required, then the pulse sequence 160 may be programmed using the following parameters:
- binary code sequence 600
- pulse length 602
- pulse repetition period 603

As in classical OTDR, a strict and precise control of the clock is required. For pulsed test signal generation, the digital control circuit 151 allows the OTDR pulse rising edge to be controlled by the clock. In the case of classical OTDR, the pulse is also precisely synchronized with sampling by means of the clock. And the pulse width is controlled by the digital control circuit 151.

In the case of a coded sequence (coded correlation and multiple coded sequence methods), pulsed test signal generation is done the same way, except that a binary code sequence 600 and a pulse sequence repetition period 603 are programmed.

Then, for each of the wavelengths in the list, either the OTDR laser source is tuned to the wavelength to be acquired or the corresponding discrete laser source is turned on. And an OTDR acquisition is performed towards the FUT.

Step 5: Extract the position of the EOF to compute the TOF

Once the OTDR acquisition is completed, the acquired trace is correlated with the sequence of pulse to obtain a processed pulse trace from which the position of the reflective peak corresponding to the end of the FOT can be retrieved.

As explained herein above with reference to Fig. 14, the acquired OTDR trace is then cross-correlated with the binary code sequence 600 launched in the FUT (or, more specifically, with an impulse pulse sequence 721 corresponding to the binary code sequence 600) to produce a processed pulse trace 711.

In the case of the repeated pulse method and the coded correlation OTDR method, the same correlation calculations are used for the correlation.

As to the multiple sequence method, multiple correlation calculations are calculated as described hereinabove with reference to Figs. 23, 24, 25 and 26.

Once the correlation is computed and the processed pulse trace 711 is obtained, the position of the remote end of the FUT is extracted from the processed pulse trace 711 by finding the maximum correlation peak near the end of fiber identified in step 1. For example, the centroid method may be used to compute the precise position of the peak on the processed pulse trace (as expressed on an index, time or pseudo-distance scale). The time-of-flight corresponding to this peak position is then retrieved (see equation (2)).

At the end of this step, an array may be produced, listing the time-of-flight or relative group delay corresponding to the end of the FUT for each wavelength (corresponding to the dots 511 in Fig. 5).

Step 6: Compute the group delay and/or chromatic dispersion

As described hereinabove with reference to Fig. 5, from the array produced in step 5 (see dots 511 in Fig. 5), a curve 512 (e.g., the Sellmeier model or any other suitable model) may be fitted using, e.g., a least square fit or any other regression method.

Then, from the parameters of the fitted model (e.g., S₀ and λ₀), the chromatic dispersion curve *CD*(*λ*) may be computed (as illustrated in Fig. 6).

Of course, a chromatic dispersion value may then be outputted for any wavelength within the range covered by the OTDR acquisitions.

### Multi-wavelength acquisitions

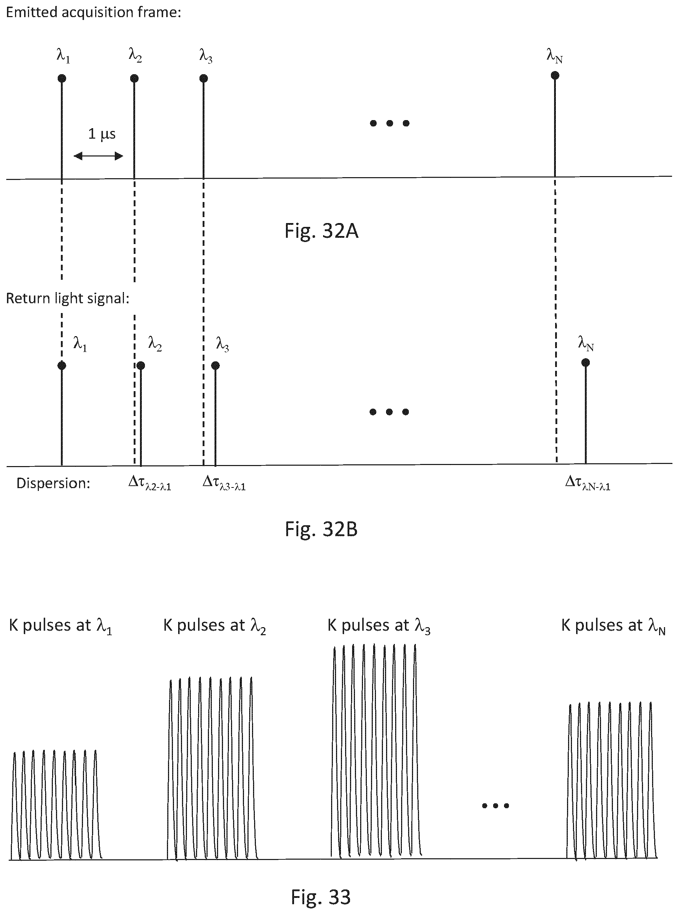

Fig. 32 illustrates another acquisition method for a chromatic dispersion measurement method in which instead of performing a set of single-wavelength OTDR acquisitions (each OTDR acquisition is performed at a corresponding wavelength of the test signal), multiple test signals are multiplexed in each OTDR acquisitions, wherein the test signals have mutually different wavelengths. That is, each acquisition frame comprises multiple pulses having mutually different wavelengths. Fig. 32A illustrates the acquisition frame, whereas Fig. 32B illustrates the corresponding return light signal.

The acquisition frame comprises at least one pulse per wavelength. In the implementation illustrated in Fig. 32, there is a single pulse per wavelength. The pulses are sequenced with a per-determined delay in between each pulse, such as, e.g., 1 µs. Each OTDR acquisition therefore comprises multiple pulses having mutually different wavelengths. Although, in principle, a single OTDR acquisitions may be sufficient for characterizing the chromatic dispersion, OTDR acquisitions may be repeated with the same sequence of pulses for averaging.

As shown in Fig. 32, the corresponding return light signal also comprises the multiple pulses having mutually different wavelengths. However, due to the varied round-trip travel time or time-of-flight of the light pulses in the optical fiber under test, the delay between pulses differs from the pulse repetition period of the test signal. The variation (Δτ) of the delay between two pulses (consecutive or not) is indicative of the time-of-flight difference between the corresponding two wavelengths, which is in turn indicative of the group delay as explained herein above. A value of the chromatic dispersion coefficient associated with the optical fiber under test may therefore be calculated from the variations (Δτ).

Fig. 33 illustrates yet another acquisition method for a chromatic dispersion measurement method which uses the same principle as illustrated in Fig. 32 (multiple test signals having mutually different wavelengths are multiplexed in each OTDR acquisitions) in combination with a sequence of pulses, i.e., the acquisition frame comprises a group of light pulses (or pulse train) for each wavelength. Of course, the plurality of light pulses of each group may use any known sequence of pulses described hereinabove (equidistant, chirped, coded, etc.). Again, the test signals are sent with a pre-determined delay in between each pulse train, such as, e.g., 1 µs. For example, the pulse train may comprise 10 equally spaced pulses having a pulse width of 10 ns, a pulse repetition period of 50 ns and a train-to-train period of 1 µs.

One will understand that the repeated pulse method (Fig. 33) or another sequence of pulses may be used to increase the dynamic range compared to the acquisition method of Fig. 32. Furthermore, the acquisition method of Fig. 33 may be used to reduce the acquisition time when compared to the repeated pulse method described hereinabove.

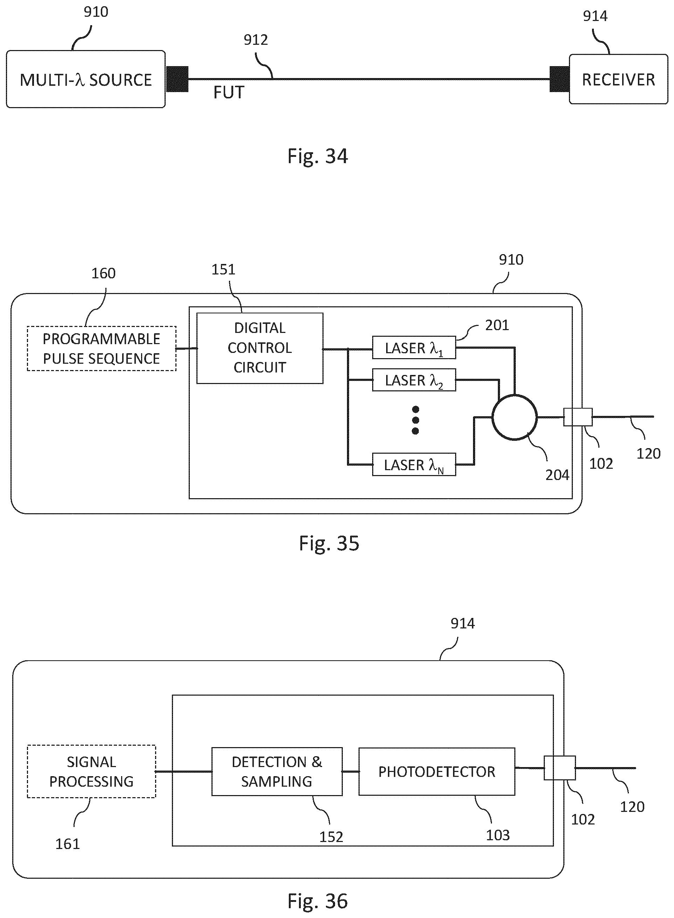

The acquisition methods illustrated in Figs. 32 and 33 may be implemented using a measurement system comprising multiple discrete laser sources having mutually different wavelengths, such as the chromatic dispersion measurement device 200 of Fig. 8. The acquisition frame is obtained by activating each laser source in sequence. It may be used with either single ended (see Fig. 1) or dual ended embodiments (see Fig. 34).

### Dual ended embodiment

Fig. 34 illustrates a chromatic dispersion measurement system in accordance with another embodiment which uses a dual ended approach instead the single ended approach of the embodiment of Fig. 1. The embodiment of Fig. 34 may be used with the multi-wavelength approach described hereinabove. As shown in Fig. 34, a multi-wavelength light source device 910 is used to propagate a test signal toward the optical Fiber link Under Test (FUT) 912 from a proximal end thereof. On the remote end of the FUT 912, a receiver device 914 is used to detect the test signal after propagation in the FUT 912. As explained hereinabove, in the multi-wavelength approach, the acquisition frame comprises a series of light pulses having mutually different wavelengths. The delay between pulses in the acquisition frame is pre-determined. Once propagated in the FUT 912, the delay between light pulses is changed by the chromatic dispersion along the FUT 912. The time-of-flight difference between two wavelengths can be retrieved from the variation (Δτ) of the delay between light pulses due to propagation in the FUT 912.

Fig. 35 illustrates a light source device 910 whereas Fig. 36 illustrates a receiver device, in accordance with one embodiment. The light source device 910 is similar to the chromatic dispersion measurement device 200, except that parts used for detection are moved to the receiver device 914, i.e., the photodetector 103, an acquisition system 152 and the signal processing unit 161. Similar components will therefore be repeatedly described. In fact, it is noted that the chromatic dispersion measurement device 200 for Fig. 8 could also be used as is for the dual ended approach. The photodetector 103, an acquisition system 152 and the signal processing unit 161 are simply not used for the dual ended measurement. For example, such light source device 910 may be used in a system designed to support both single and the dual ended measurements.

The receiver device 914 may operate like a sampling oscilloscope, wherein the first light pulses received acts as a trigger. This way each laser impulse can be reconstructed precisely, and the differential delay induced by chromatic dispersion can be computed using the same fitting technique as the single ended time-of-flight method.

One will understand that the dual ended method has the advantage of allowing to pass through network amplifiers. It is also noted that dual ended method does not require any communication nor synchronization between the light source device 910 and the receiver device 914.

It should also be noted that the dual ended approach naturally offers a greater dynamic range, because light pulses do not have to propagate backward in the FUT as in the single ended approach. This means that a sequence of pulses may not be used in some embodiments.

### Example of OTDR device architecture

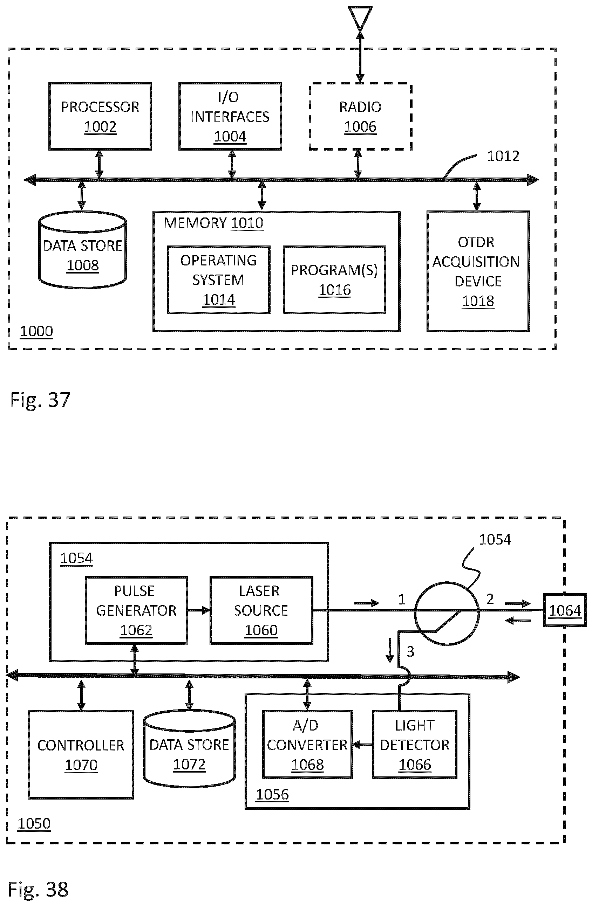

Fig. 37 is a block diagram of an OTDR device 1000 which may embody the OTDR device 10 of Fig. 1. The OTDR device 1000 may comprise a digital device that, in terms of hardware architecture, generally includes a processor 1002, input/output (I/O) interfaces 1004, an optional radio 1006, a data store 1008, a memory 1010, as well as an optical test device including an OTDR acquisition device 1018. It should be appreciated by those of ordinary skill in the art that Fig. 37 depicts the OTDR device 1000 in a simplified manner, and a practical embodiment may include additional components and suitably configured processing logic to support known or conventional operating features that are not described in detail herein. A local interface 1012 interconnects the major components. The local interface 1012 can be, for example, but not limited to, one or more buses or other wired or wireless connections, as is known in the art. The local interface 1012 can have additional elements, which are omitted for simplicity, such as controllers, buffers (caches), drivers, repeaters, and receivers, among many others, to enable communications. Further, the local interface 1012 may include address, control, and/or data connections to enable appropriate communications among the aforementioned components.

The processing unit 1002 is a hardware device for executing software instructions. The processing unit 1002 may comprise one or more processors, including central processing units (CPU), auxiliary processor(s) or generally any device for executing software instructions. When the OTDR device 1000 is in operation, the processing unit 1002 is configured to execute software stored within the memory 1010, to communicate data to and from the memory 1010, and to generally control operations of the OTDR device 1000 pursuant to the software instructions. In an embodiment, the processing unit 1002 may include an optimized mobile processor such as optimized for power consumption and mobile applications. The I/O interfaces 1004 can be used to receive user input from and/or for providing system output. User input can be provided via, for example, a keypad, a touch screen, a scroll ball, a scroll bar, buttons, barcode scanner, and the like. System output can be provided via a display device such as a liquid crystal display (LCD), touch screen, and the like, via one or more LEDs or a set of LEDs, or via one or more buzzer or beepers, etc. The I/O interfaces 1004 can be used to display a graphical user interface (GUI) that enables a user to interact with the OTDR device 1000 and/or output at least one of the values derived by the OTDR analyzing module.

The radio 1006, if included, may enable wireless communication to an external access device or network. Any number of suitable wireless data communication protocols, techniques, or methodologies can be supported by the radio 1006, including, without limitation: RF; IrDA (infrared); Bluetooth; ZigBee (and other variants of the IEEE 802.15 protocol); IEEE 802.11 (any variation); IEEE 802.16 (WiMAX or any other variation); Direct Sequence Spread Spectrum; Frequency Hopping Spread Spectrum; Long Term Evolution (LTE); cellular/wireless/cordless telecommunication protocols (e.g. 3G/4G, etc.); NarrowBand Internet of Things (NB-IoT); Long Term Evolution Machine Type Communication (LTE-M); magnetic induction; satellite data communication protocols; and any other protocols for wireless communication. The data store 1008 may be used to store data, such as OTDR traces and OTDR measurement data files. The data store 1008 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 1008 may incorporate electronic, magnetic, optical, and/or other types of storage media.

The memory 1010 may include any of volatile memory elements (e.g., random access memory (RAM, such as DRAM, SRAM, SDRAM, etc.)), nonvolatile memory elements (e.g., ROM, hard drive, etc.), and combinations thereof. Moreover, the memory 1010 may incorporate electronic, magnetic, optical, and/or other types of storage media. Note that the memory 1010 may have a distributed architecture, where various components are situated remotely from one another, but can be accessed by the processor 1002. The software in memory 1010 can include one or more computer programs, each of which includes an ordered listing of executable instructions for implementing logical functions. In the example of Fig. 37, the software in the memory 1010 includes a suitable operating system (O/S) 1014 and computer programs 1016. The operating system 1014 essentially controls the execution of other computer programs and provides scheduling, input-output control, file and data management, memory management, and communication control and related services. The program(s) 1016 may include various applications, add-ons, etc. configured to provide end-user functionality with the OTDR device 1000. For example, example programs 1016 may include a web browser to connect with a server for transferring OTDR measurement data files, a dedicated OTDR application configured to control OTDR acquisitions by the OTDR acquisition device 1018, set OTDR acquisition parameters, analyze OTDR traces obtained by the OTDR acquisition device 1018 and display a GUI related to the OTDR device 1000. For example, the dedicated OTDR application may embody a chromatic dispersion analysis module configured to analyze acquired OTDR traces in order to characterize the optical fiber link under test, and produce chromatic dispersion measurement results.

It is noted that, in some embodiments, the I/O interfaces 1004 may be provided via a physically distinct mobile device (not shown), such as a handheld computer, a smartphone, a tablet computer, a laptop computer, a wearable computer or the like, e.g., communicatively coupled to the OTDR device 1000 via the radio 106. In such cases, at least some of the programs 1016 may be located in a memory of such a mobile device, for execution by a processor of the physically distinct device. The mobile may then also include a radio and be used to transfer OTDR measurement data files toward a remote test application residing, e.g., on a server.

It should be noted that the OTDR device shown in Fig. 37 is meant as an illustrative example only. Numerous types of computer systems are available and can be used to implement the OTDR device.

### Example of OTDR acquisition device architecture

Fig. 38 is a block diagram an embodiment of an OTDR acquisition device 1050 which may embody the OTDR acquisition device 1018 of the OTDR device 1000 of Fig. 37.

The OTDR acquisition device 1050 is connectable toward the tested optical fiber link via an output interface 1064, for performing OTDR acquisitions toward the optical fiber link. The OTDR acquisition device 1050 comprises conventional optical hardware and electronics as known in the art for performing OTDR acquisitions over an optical fiber link.

The OTDR acquisition device 1050 comprises a light generating assembly 1054, a detection assembly 1056, a directional coupler 1058, as well as a controller 1070 and a data store 1072.

The light generating assembly 1054 is embodied by a laser source 1060 driven by a pulse generator 1062 to generate the OTDR test signal comprising test light pulses having desired characteristics. As known in the art, the light generating assembly 1054 is adapted to generate test light pulses of varied pulse widths, repetition periods and optical power through a proper control of the pattern produced by the pulse generator 1062. One skilled in the art will understand that it may be beneficial or required by the application to perform OTDR measurements at various different wavelengths. For this purpose, in some embodiments, the light generating assembly 1054 is adapted to generate test light pulses having varied wavelengths by employing a laser source 1060 that is tunable for example. It will be understood that the light generating assembly 1054 may combine both pulse width and wavelength control capabilities. Of course, different and/or additional components may be provided in the light generating assembly, such as modulators, lenses, mirrors, optical filters, wavelength selectors and the like.

The light generating assembly 1054 is coupled to the output interface 1064 of the OTDR acquisition device 1050 through a directional coupler 1058, such as a circulator, having three or more ports. The first port is connected to the light generating assembly 1054 to receive the test light pulses therefrom. The second port is connected toward the output interface 1064. The third port is connected to the detection assembly 1056. The connections are such that test light pulses generated by the light generating assembly 1054 are coupled to the output interface 1064 and that the return light signal arising from backscattering and reflections along the optical fiber link under test is coupled to the detection assembly 1056.

The detection assembly 1056 comprises a light detector 1066, such as a photodiode, an avalanche photodiode or any other suitable photodetector, which detects the return light signal corresponding to each test signal, and an analog to digital converter 1068 to convert the electrical signal proportional to the detected return light signal from analog to digital in order to allow data storage and processing. It will be understood that the detected return light signal may of course be amplified, filtered or otherwise processed before analog to digital conversion. The power level of return light signal as a function of time, which is obtained from the detection and conversion above, is referred to as one acquisition of an OTDR trace. One skilled in the art will readily understand that in the context of OTDR methods and systems, each light acquisition generally involves propagating a large number of substantially identical test signals in the optical fiber link and averaging the results, in order to improve the Signal-to-Noise Ratio (SNR). In this case, the result obtained from averaging is herein referred to as an OTDR trace.

Of course, the OTDR acquisition device 1050 may also be used to perform multiple acquisitions with varied pulse widths to obtain a multi-pulsewidth OTDR measurement.

The OTDR acquisition device 1050, and more specifically the light generating assembly 1054 is controlled by the controller 1070. The controller 1070 is a hardware logic device. It may comprise one or more Field Programmable Gate Array (FPGA); one or more Application Specific Integrated Circuits (ASICs) or one or more processors, configured with a logic state machine or stored program instructions. When the OTDR acquisition device 1050 is in operation, the controller 1070 is configured to control the OTDR measurement process. The controller 1070 controls parameters of the light generating assembly 1054 according to OTDR acquisition parameters that are either provided by the operator of the OTDR software or otherwise determined by program(s) 1016.

The data store 1072 may be used to cumulate raw data received from the detection assembly 1056, as well as intermediary averaged results and resulting OTDR traces. The data store 1008 may include any of volatile memory elements (e.g., random access memory (RAM, such as DRAM, SRAM, SDRAM, and the like)) or the like and it may be embedded with the controller 1070 or distinct.

The OTDR traces acquired by the OTDR acquisition device 1050 may be received and analyzed by one or more of the computer programs 1016 and/or stored in data store 1008 for further processing.

It should be noted that the architecture of the OTDR acquisition device 1050 as shown in Fig. 38 is meant as an illustrative example only. Numerous types of optical and electronic components are available and can be used to implement the OTDR acquisition device.

It will be appreciated that some embodiments described herein may include one or more generic or specialized processors ("one or more processors") such as microprocessors; Central Processing Units (CPUs); Digital Signal Processors (DSPs): customized processors such as Network Processors (NPs) or Network Processing Units (NPUs), Graphics Processing Units (GPUs), or the like; Field Programmable Gate Arrays (FPGAs); and the like along with unique stored program instructions (including both software and firmware) for control thereof to implement, in conjunction with certain non-processor circuits, some, most, or all of the functions of the methods and/or systems described herein. Alternatively, some or all functions may be implemented by a state machine that has no stored program instructions, or in one or more Application Specific Integrated Circuits (ASICs), in which each function or some combinations of certain of the functions are implemented as custom logic or circuitry. Of course, a combination of the aforementioned approaches may be used. For some of the embodiments described herein, a corresponding device in hardware and optionally with software, firmware, and a combination thereof can be referred to as "circuitry configured or adapted to," "logic configured or adapted to," etc. perform a set of operations, steps, methods, processes, algorithms, functions, techniques, etc. on digital and/or analog signals as described herein for the various embodiments.

Moreover, some embodiments may include a non-transitory computer-readable storage medium having computer readable code stored thereon for programming a computer, server, appliance, device, processor, circuit, etc. each of which may include a processor to perform functions as described and claimed herein. Examples of such computer-readable storage mediums include, but are not limited to, a hard disk, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory), Flash memory, and the like. When stored in the non-transitory computer-readable medium, software can include instructions executable by a processor or device (e.g., any type of programmable circuitry or logic) that, in response to such execution, cause a processor or the device to perform a set of operations, steps, methods, processes, algorithms, functions, techniques, etc. as described herein for the various embodiments.

The embodiments described above are intended to be exemplary only and one skilled in the art will recognize that numerous modifications can be made to these embodiments without departing from the scope of the claims.

Although the present disclosure has been illustrated and described herein with reference to specific embodiments and examples thereof, it will be readily apparent to those of ordinary skill in the art that other embodiments and examples may perform similar functions and/or achieve like results.

## Claims

1. A chromatic dispersion measurement method for characterizing an optical fiber link under test, the method comprising:
from a proximal end of the optical fiber link, performing at least one OTDR acquisition,
wherein each OTDR acquisition is performed by propagating in the optical fiber link under test, at least one test signal comprising a plurality of light pulses in accordance with a known sequence of pulses and detecting corresponding return light signal from the optical fiber link so as to obtain a trace representing backscattered and reflected light as a function of distance in the optical fiber link under test, and
wherein plurality of test signals having mutually different wavelengths is obtained by one of: a) performing a set of OTDR acquisitions for a corresponding set of mutually different wavelengths, and b) each OTDR acquisition is performed by propagating in the optical fiber link under test, a plurality of test signals, in sequence; and
for each test signal and corresponding wavelength, extracting from the return light signal, a position of the reflective peak associated with a remote end of the optical fiber link by calculating a cross-correlation between the known sequence of pulses and the acquired trace; and
calculating a value of a chromatic dispersion coefficient associated with said optical fiber link from values of the extracted positions and corresponding wavelengths.

2. The chromatic dispersion measurement method as claimed in claim 1, wherein said performing at least one OTDR acquisition comprises performing a set of OTDR acquisitions for a corresponding set of mutually different wavelengths and wherein each of said OTDR acquisitions is performed with a corresponding wavelength of said test signal.

3. The chromatic dispersion measurement method as claimed in claim 1, wherein each OTDR acquisition is performed by propagating in the optical fiber link under test, said plurality of test signals, in sequence.

4. The chromatic dispersion measurement method as claimed in any one of claims 1 to 3, wherein calculating a value of a chromatic dispersion coefficient comprises: for each wavelength, calculating a value of a group delay associated with said optical fiber link from values of the extracted positions and calculating a chromatic dispersion coefficient associated with said optical fiber link from values of group delay and corresponding values of wavelengths.

5. The chromatic dispersion measurement method as claimed in claim 4, wherein said OTDR acquisitions are performed for at least three mutually different wavelengths and wherein said calculating a chromatic dispersion coefficient comprises fitting a function on values of group delay and corresponding values of wavelengths, wherein said function corresponds to the Sellmeier model of delay as a function of wavelength and wherein said chromatic dispersion coefficient is calculated from the fitted function.

6. The chromatic dispersion measurement method as claimed in any one of claims 1 to 5, wherein said known sequence of pulses comprises a periodic equidistant repeated pulse sequence.

7. The chromatic dispersion measurement method as claimed in any one of claims 1 to 5, wherein said known sequence of pulses comprises a chirped sequence of pulses.

8. The chromatic dispersion measurement method as claimed in any one of claims 1 to 5, wherein said known sequence of pulses comprises a coded sequence of pulses.

9. A chromatic dispersion measurement system for characterizing an optical fiber link under test (912), the system comprising:
an OTDR acquisition device (1018) connectable toward a proximal end of the optical fiber link for performing at least one OTDR acquisition toward the optical fiber link,
wherein each OTDR acquisition is performed by propagating in the optical fiber link under test, at least one test signal comprising a plurality of light pulses in accordance with a known sequence of pulses and detecting corresponding return light signal from the optical fiber link so as to obtain a trace representing backscattered and reflected light as a function of distance in the optical fiber link;
wherein plurality of test signals having mutually different wavelengths is obtained by one of: a) performing a set of OTDR acquisitions for a corresponding set of mutually different wavelengths, and b) each OTDR acquisition is performed by propagating in the optical fiber link under test, a plurality of test signals, in sequence; and
a processing unit (161) receiving the trace and configured for
for each test signal and corresponding wavelength, extracting from the return light signal, a position of the reflective peak associated with a remote end of the optical fiber link by calculating a cross-correlation between the known sequence of pulses and the acquired trace; and
calculating a value of a chromatic dispersion coefficient associated with said optical fiber link from values of the extracted positions and corresponding wavelengths.

10. The chromatic dispersion measurement system as claimed in claim 9, wherein said performing at least one OTDR acquisition comprises performing a set of OTDR acquisitions for a corresponding set of mutually different wavelengths and wherein each of said OTDR acquisitions is performed with a corresponding wavelength of said test signal; and

11. The chromatic dispersion measurement system as claimed in claim 9, wherein each OTDR acquisition is performed by propagating in the optical fiber link under test, said plurality of test signals, in sequence.

12. The chromatic dispersion measurement system as claimed in any one of claims 9 to 11, wherein said OTDR acquisition device comprises:
a light generating assembly (1054) comprising a tunable laser source (1060) and pulse generator (1062) and configured to generate said test signal comprising a plurality of light pulses in accordance with the known sequence of pulses, at said mutually different wavelengths.

13. The chromatic dispersion measurement system as claimed in in any one of claims 9 to 11, wherein said OTDR acquisition device comprises:
a light generating assembly (1054) comprising a plurality of laser sources (1060) having mutually different wavelengths and pulse generator (1062), said light generating assembly being configured to generate said test signal comprising a plurality of light pulses in accordance with the known sequence of pulses, at said mutually different wavelengths.

14. The chromatic dispersion measurement system as claimed in claim 13, wherein said OTDR acquisition device comprises:
a light detecting assembly (1056) comprising a light detector (1066) configured to detect light returning from said optical fiber link from said test signal for each of said OTDR acquisitions, to obtain said trace.

15. The chromatic dispersion measurement system as claimed in any one of claims 9 to 14, wherein said known sequence of pulses comprises one of: a periodic equidistant repeated pulse sequence, a chirped sequence of pulses and a coded sequence of pulses.

## Patentansprüche

1. Verfahren zur Messung der chromatischen Dispersion zum Charakterisieren einer zu testenden Glasfaserstrecke, wobei das Verfahren Folgendes umfasst:
von einem proximalen Ende der Glasfaserstrecke Durchführen mindestens einer OTDR-Erfassung,
wobei jede OTDR-Erfassung durch Verbreiten, in der zu testenden Glasfaserstrecke, mindestens eines Testsignals, das eine Vielzahl von Lichtimpulsen in Übereinstimmung mit einer bekannten Sequenz von Impulsen umfasst, und Erkennen eines entsprechenden zurückkehrenden Lichtsignals von der Glasfaserstrecke, um eine Spur zu erhalten, die rückgestreutes und reflektiertes Licht in Abhängigkeit von einer Entfernung in der zu testenden Glasfaserstrecke darstellt, durchgeführt wird, und
wobei eine Vielzahl von Testsignalen mit voneinander verschiedenen Wellenlängen durch eines von Folgendem erhalten wird: a) Durchführen eines Satzes von OTDR-Erfassungen für einen entsprechenden Satz von voneinander verschiedenen Wellenlängen, und b) jede OTDR-Erfassung wird durch Verbreiten, in der zu testenden Glasfaserstrecke, einer Vielzahl von Testsignalen nacheinander durchgeführt; und
für jedes Testsignal und jede entsprechende Wellenlänge Extrahieren, aus dem zurückkehrenden Lichtsignal, einer Position des reflektierenden Peaks, der einem entfernten Ende der Glasfaserstrecke zugeordnet ist, durch Berechnen einer Kreuzkorrelation zwischen der bekannten Sequenz von Impulsen und der erfassten Spur; und
Berechnen eines Werts eines chromatischen Dispersionskoeffizienten, der der Glasfaserstrecke zugeordnet ist, aus Werten der extrahierten Positionen und entsprechenden Wellenlängen.

2. Verfahren zur Messung der chromatischen Dispersion nach Anspruch 1, wobei das Durchführen mindestens einer OTDR-Erfassung das Durchführen eines Satzes von OTDR-Erfassungen für einen entsprechenden Satz von voneinander verschiedenen Wellenlängen umfasst, und wobei jede der OTDR-Erfassungen mit einer entsprechenden Wellenlänge des Testsignals durchgeführt wird.

3. Verfahren zur Messung der chromatischen Dispersion nach Anspruch 1, wobei jede OTDR-Erfassung durch Verbreiten, in der zu testenden Glasfaserstrecke, der Vielzahl von Testsignalen nacheinander durchgeführt wird.

4. Verfahren zur Messung der chromatischen Dispersion nach einem der Ansprüche 1 bis 3, wobei das Berechnen eines Werts eines chromatischen Dispersionskoeffizienten Folgendes umfasst: für jede Wellenlänge Berechnen eines Werts einer Gruppenverzögerung, die der Glasfaserstrecke zugeordnet ist, aus Werten der extrahierten Positionen und Berechnen eines chromatischen Dispersionskoeffizienten, der der Glasfaserstrecke zugeordnet ist, aus Werten der Gruppenverzögerung und entsprechenden Werten von Wellenlängen.

5. Verfahren zur Messung der chromatischen Dispersion nach Anspruch 4, wobei die OTDR-Erfassungen für mindestens drei voneinander verschiedene Wellenlängen durchgeführt werden und wobei das Berechnen eines chromatischen Dispersionskoeffizienten das Anpassen einer Funktion an Werte der Gruppenverzögerung und entsprechende Werte von Wellenlängen umfasst, wobei die Funktion dem Sellmeier-Modell der Verzögerung in Abhängigkeit von der Wellenlänge entspricht und wobei der chromatische Dispersionskoeffizient aus der angepassten Funktion berechnet wird.

6. Verfahren zur Messung der chromatischen Dispersion nach einem der Ansprüche 1 bis 5, wobei die bekannte Sequenz von Impulsen eine periodische äquidistante wiederholte Impulssequenz umfasst.

7. Verfahren zur Messung der chromatischen Dispersion nach einem der Ansprüche 1 bis 5, wobei die bekannte Sequenz von Impulsen eine gechirpte Sequenz von Impulsen umfasst.

8. Verfahren zur Messung der chromatischen Dispersion nach einem der Ansprüche 1 bis 5, wobei die bekannte Sequenz von Impulsen eine codierte Sequenz von Impulsen umfasst.

9. System zur Messung der chromatischen Dispersion zum Charakterisieren einer zu testenden Glasfaserstrecke (912), wobei das System Folgendes umfasst:
eine OTDR-Erfassungsvorrichtung (1018), die in Richtung eines proximalen Endes der Glasfaserstrecke verbunden werden kann, um mindestens eine OTDR-Erfassung in Richtung der Glasfaserstrecke durchzuführen, wobei jede OTDR-Erfassung durch Verbreiten, in der zu testenden Glasfaserstrecke, mindestens eines Testsignals, das eine Vielzahl von Lichtimpulsen in Übereinstimmung mit einer bekannten Sequenz von Impulsen umfasst, und Erkennen eines entsprechenden zurückkehrenden Lichtsignals von der Glasfaserstrecke, um eine Spur zu erhalten, die rückgestreutes und reflektiertes Licht in Abhängigkeit von einer Entfernung in der Glasfaserverbindung darstellt, durchgeführt wird;
wobei eine Vielzahl von Testsignalen mit voneinander verschiedenen Wellenlängen durch eines von Folgendem erhalten wird: a) Durchführen eines Satzes von OTDR-Erfassungen für einen entsprechenden Satz von voneinander verschiedenen Wellenlängen, und b) jede OTDR-Erfassung wird durch Verbreiten, in der zu testenden Glasfaserstrecke, einer Vielzahl von Testsignalen nacheinander durchgeführt; und
eine Verarbeitungseinheit (161), die die Spur empfängt und konfiguriert ist zum:
für jedes Testsignal und jede entsprechende Wellenlänge Extrahieren, aus dem zurückkehrenden Lichtsignal, einer Position des reflektierenden Peaks, der einem entfernten Ende der Glasfaserstrecke zugeordnet ist, durch Berechnen einer Kreuzkorrelation zwischen der bekannten Sequenz von Impulsen und der erfassten Spur; und
Berechnen eines Werts eines chromatischen Dispersionskoeffizienten, der der Glasfaserstrecke zugeordnet ist, aus Werten der extrahierten Positionen und entsprechenden Wellenlängen.

10. System zur Messung der chromatischen Dispersion nach Anspruch 9, wobei das Durchführen mindestens einer OTDR-Erfassung das Durchführen eines Satzes von OTDR-Erfassungen für einen entsprechenden Satz von voneinander verschiedenen Wellenlängen umfasst, und wobei jede der OTDR-Erfassungen mit einer entsprechenden Wellenlänge des Testsignals durchgeführt wird; und

11. System zur Messung der chromatischen Dispersion nach Anspruch 9, wobei jede OTDR-Erfassung durch Verbreiten, in der zu testenden Glasfaserstrecke, der Vielzahl von Testsignalen nacheinander durchgeführt wird.

12. System zur Messung der chromatischen Dispersion nach einem der Ansprüche 9 bis 11, wobei die OTDR-Erfassungsvorrichtung Folgendes umfasst:
eine Lichterzeugungsanordnung (1054),
die eine abstimmbare Laserquelle (1060) und einen Impulsgenerator (1062) umfasst und dazu konfiguriert ist, das Testsignal, das eine Vielzahl von Lichtimpulsen in Übereinstimmung mit der bekannten Sequenz von Impulsen umfasst, bei den voneinander verschiedenen Wellenlängen zu erzeugen.

13. System zur Messung der chromatischen Dispersion nach einem der Ansprüche 9 bis 11, wobei die OTDR-Erfassungsvorrichtung Folgendes umfasst: eine Lichterzeugungsanordnung (1054), die eine Vielzahl von Laserquellen (1060) mit voneinander verschiedenen Wellenlängen und einen Impulsgenerator (1062) umfasst, wobei die Lichterzeugungsanordnung dazu konfiguriert ist, das Testsignal, das eine Vielzahl von Lichtimpulsen in Übereinstimmung mit der bekannten Sequenz von Impulsen umfasst, bei den voneinander verschiedenen Wellenlängen zu erzeugen.

14. System zur Messung der chromatischen Dispersion nach Anspruch 13, wobei die OTDR-Erfassungsvorrichtung Folgendes umfasst:
eine Lichterkennungsanordnung (1056), die einen Lichtdetektor (1066) umfasst, der dazu konfiguriert ist, für jede der OTDR-Erfassungen Licht zu erkennen, das von der Glasfaserstrecke aus dem Testsignal zurückkehrt, um die Spur zu erhalten.

15. System zur Messung der chromatischen Dispersion nach einem der Ansprüche 9 bis 14, wobei die bekannte Sequenz von Impulsen eines von Folgendem umfasst: eine periodische äquidistante wiederholte Impulssequenz, eine gechirpte Sequenz von Impulsen und eine codierte Sequenz von Impulsen.

## Revendications

1. Procédé de mesure de dispersion chromatique permettant de caractériser une liaison par fibre optique en cours d'essai, le procédé comprenant :
à partir d'une extrémité proximale de la liaison par fibre optique, la réalisation d'au moins une acquisition OTDR,
chaque acquisition OTDR étant réalisée par propagation dans la liaison par fibre optique en cours d'essai, d'au moins un signal d'essai comprenant une pluralité d'impulsions lumineuses conformément à une séquence d'impulsions connue et détection du signal lumineux retour correspondant provenant de la liaison par fibre optique de façon à obtenir une trace représentant la lumière rétrodiffusée et réfléchie en fonction de la distance dans la liaison par fibre optique en cours d'essai, et
une pluralité de signaux d'essai possédant des longueurs d'onde mutuellement différentes étant obtenue par un parmi : a) la réalisation d'un ensemble d'acquisitions OTDR pour un ensemble correspondant de longueurs d'onde mutuellement différentes, et b) chaque acquisition OTDR étant réalisée par propagation dans la liaison par fibre optique en cours d'essai, d'une pluralité de signaux d'essai, en séquence ; et
pour chaque signal d'essai et longueur d'onde correspondante, extraction, à partir du signal lumineux retour, d'une position du pic de réflexion associé à une extrémité distante de la liaison par fibre optique par calcul d'une intercorrélation entre la séquence d'impulsions connue et la trace acquise ; et
calcul d'une valeur d'un coefficient de dispersion chromatique associé à ladite liaison par fibre optique à partir des valeurs des positions extraites et des longueurs d'onde correspondantes.

2. Procédé de mesure de dispersion chromatique selon la revendication 1, ladite réalisation d'au moins une acquisition OTDR comprenant la réalisation d'un ensemble d'acquisitions OTDR pour un ensemble correspondant de longueurs d'onde mutuellement différentes et chacune desdites acquisitions OTDR étant réalisée avec une longueur d'onde correspondante dudit signal d'essai.

3. Procédé de mesure de dispersion chromatique selon la revendication 1, chaque acquisition OTDR étant réalisée par propagation dans la liaison par fibre optique en cours d'essai, de ladite pluralité de signaux d'essai, en séquence.

4. Procédé de mesure de dispersion chromatique selon l'une quelconque des revendications 1 à 3, ledit calcul d'une valeur d'un coefficient de dispersion chromatique comprenant : pour chaque longueur d'onde, le calcul d'une valeur d'un retard de groupe associé à ladite liaison par fibre optique à partir des valeurs des positions extraites et le calcul d'un coefficient de dispersion chromatique associé à ladite liaison par fibre optique à partir des valeurs de retard de groupe et des valeurs correspondantes des longueurs d'onde.

5. Procédé de mesure de dispersion chromatique selon la revendication 4, lesdites acquisitions OTDR étant réalisées pour au moins trois longueurs d'onde mutuellement différentes et ledit calcul d'un coefficient de dispersion chromatique comprenant l'ajustement d'une fonction sur des valeurs de retard de groupe et des valeurs correspondantes de longueurs d'onde, ladite fonction correspondant au modèle de Sellmeier de retard en fonction de la longueur d'onde et ledit coefficient de dispersion chromatique étant calculé à partir de la fonction ajustée.

6. Procédé de mesure de dispersion chromatique selon l'une quelconque des revendications 1 à 5, ladite séquence connue d'impulsions comprenant une séquence périodique d'impulsions répétées équidistantes.

7. Procédé de mesure de dispersion chromatique selon l'une quelconque des revendications 1 à 5, ladite séquence connue d'impulsions comprenant une séquence modulée d'impulsions.

8. Procédé de mesure de dispersion chromatique selon l'une quelconque des revendications 1 à 5, ladite séquence connue d'impulsions comprenant une séquence codée d'impulsions.

9. Système de mesure de dispersion chromatique destiné à caractériser une liaison par fibre optique en cours d'essai (912), le système comprenant :
un dispositif d'acquisition OTDR (1018) pouvant être connecté vers une extrémité proximale de la liaison par fibre optique pour réaliser au moins une acquisition OTDR vers la liaison par fibre optique, chaque acquisition OTDR étant réalisée par propagation dans la liaison par fibre optique en cours d'essai, d'au moins un signal d'essai comprenant une pluralité d'impulsions lumineuses conformément à une séquence d'impulsions connue et détection du signal lumineux retour correspondant provenant de la liaison par fibre optique de façon à obtenir une trace représentant la lumière rétrodiffusée et réfléchie en fonction de la distance dans la liaison par fibre optique ;
une pluralité de signaux d'essai possédant des longueurs d'onde mutuellement différentes étant obtenue par un parmi : a) la réalisation d'un ensemble d'acquisitions OTDR pour un ensemble correspondant de longueurs d'onde mutuellement différentes, et b) chaque acquisition OTDR étant réalisée par propagation dans la liaison par fibre optique en cours d'essai, d'une pluralité de signaux d'essai, en séquence ; et
une unité de traitement (161) recevant la trace et configurée pour :
pour chaque signal d'essai et longueur d'onde correspondante, extraire, à partir du signal lumineux retour, une position du pic de réflexion associé à une extrémité distante de la liaison par fibre optique par calcul d'une intercorrélation entre la séquence d'impulsions connue et la trace acquise ; et
calculer une valeur d'un coefficient de dispersion chromatique associé à ladite liaison par fibre optique à partir des valeurs des positions extraites et des longueurs d'onde correspondantes.

10. Système de mesure de dispersion chromatique selon la revendication 9, ladite réalisation d'au moins une acquisition OTDR comprenant la réalisation d'un ensemble d'acquisitions OTDR pour un ensemble correspondant de longueurs d'onde mutuellement différentes et chacune desdites acquisitions OTDR étant réalisée avec une longueur d'onde correspondante dudit signal d'essai ; et

11. Système de mesure de dispersion chromatique selon la revendication 9, chaque acquisition OTDR étant réalisée par propagation dans la liaison par fibre optique en cours d'essai, de ladite pluralité de signaux d'essai, en séquence.

12. Système de mesure de dispersion chromatique selon l'une quelconque des revendications 9 à 11, ledit dispositif d'acquisition OTDR comprenant : un ensemble de génération de lumière (1054)
comprenant une source laser accordable (1060) et un générateur d'impulsions (1062) et configuré pour générer ledit signal d'essai comprenant une pluralité d'impulsions lumineuses conformément à la séquence d'impulsions connue, auxdites longueurs d'onde mutuellement différentes.

13. Système de mesure de dispersion chromatique selon l'une quelconque des revendications 9 à 11, ledit dispositif d'acquisition OTDR comprenant : un ensemble de génération de lumière (1054) comprenant une pluralité de sources laser (1060) possédant des longueurs d'onde mutuellement différentes et un générateur d'impulsions (1062), ledit ensemble de génération de lumière étant configuré pour générer ledit signal d'essai comprenant une pluralité d'impulsions lumineuses conformément à la séquence d'impulsions connue, auxdites longueurs d'onde mutuellement différentes.

14. Système de mesure de dispersion chromatique selon la revendication 13, ledit dispositif d'acquisition OTDR comprenant :
un ensemble de détection de lumière (1056) comprenant un détecteur de lumière (1066) configuré pour détecter la lumière revenant de ladite liaison par fibre optique provenant dudit signal d'essai pour chacune desdites acquisitions OTDR, afin d'obtenir ladite trace.

15. Système de mesure de dispersion chromatique selon l'une quelconque des revendications 9 à 14, ladite séquence connue d'impulsions comprenant une parmi : une séquence périodique d'impulsions répétées équidistantes, une séquence modulée d'impulsions et une séquence codée d'impulsions.
